# EUROPEAN PATENT APPLICATION

(11) **EP 3 001 721 A1**
(43) Date of publication of application: **30.03.2016**
(21) Application number: 15151054.2
(22) Date of filing: 16.02.2012
(51) Int. Cl.: H04W 24/10

(54) **Nodes and methods for enabling measurements performed by a wireless device**

(30) Priority: 03.05.2011 US 201161481934 P
(62) Divisional of application: 12708179.2
(71) Applicant: Telefonaktiebolaget LM Ericsson (publ), 164 83 Stockholm (SE)
(72) Inventor: Siomina, Iana, SE-18330 Täby (SE); Kazmi, Muhammad, SE-167 39 BROMMA (SE)
(74) Representative: Ericsson

(57) **Abstract**

The disclosure relates to a method in a network node of a communications system, for enabling measurements performed by a wireless device, when MBSFN subframes are configured in the system. The method comprises determining (610) a measurement resource restriction pattern indicating subframes for performing at least one measurement for at least one cell, wherein the indicated subframes are non-MBSFN subframes comprising subframes that are not MBSFN configurable. The method also comprises transmitting (620) the measurement resource restriction pattern to the wireless device, for enabling measurements for the at least one cell according to the pattern. The disclosure also relates to a method in a wireless device for performing measurements when MBSFN subframes are configured in the system.

## Description

### TECHNICAL FIELD

The disclosure relates to wireless networks where Multimedia Broadcast multicast service Single Frequency Network (MBSFN) subframes are configured, and in particular to methods and nodes for enabling measurements performed by a wireless device when MBSFN subframes are configured in the system.

### BACKGROUND

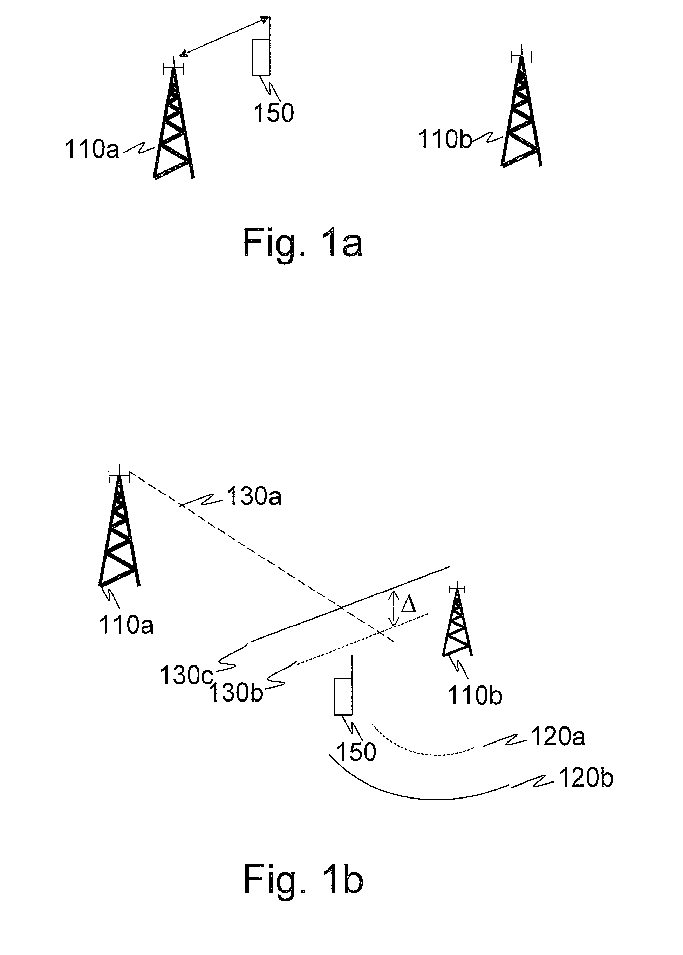

3GPP Long Term Evolution (LTE) is the fourth-generation mobile communication technologies standard developed within the 3^{rd} Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an UTRAN and an E-UTRAN, a user equipment (UE) 150 is wirelessly connected to a radio Base Station (BS) 110a, as illustrated in **Figure 1a****.** The BSs 110a-b are commonly referred to as a NodeB in UTRAN and as an evolved NodeB (eNodeB) in E-UTRAN. Each BS serves one or more areas referred to as cells.

The interest in deploying low-power nodes, such as pico BSs, home eNodeBs, relays, and remote radio heads, for enhancing the macro network performance in terms of the network coverage, capacity and service experience of individual users has been constantly increasing over the last few years. At the same time, the need for enhanced interference management techniques is increasing. The interference management techniques are needed to address the arising interference issues caused, for example, by a significant transmit power variation among different cells and cell association techniques that has been developed earlier in order to get more uniform networks.

In 3GPP, heterogeneous network deployments have been defined as deployments where low-power nodes of different transmit powers are placed throughout a macro-cell layout, which also implies a non-uniform traffic distribution. Such deployments may be effective for capacity extension in certain areas, so-called traffic hotspots. Traffic hotspots are small geographical areas with a higher user density and/or a higher traffic intensity. In such hotspots, the installation of pico nodes may be considered to enhance performance. Heterogeneous network deployments may also be viewed as a way of making networks denser to adapt to the traffic needs and the environment. However, heterogeneous deployments also create challenges for which the network has to be prepared to ensure efficient network operation and superior user experience. Some challenges are related to the increased interference which is the result of the increase of small cells associated with low-power nodes, also called cell range expansion.

### Cell Range Expansion

The need for enhanced Inter-Cell Interference Coordination (ICIC) techniques is particularly crucial when the cell assignment rule diverges from the Reference Signal Received Power (RSRP)-based approach. This is e.g. the case when a path loss- or a path gain-based approach is used. This approach is sometimes also referred to as the cell range expansion, when it is adopted for cells with a transmit power lower than neighbour cells. The idea of the cell range expansion is illustrated in **Figure 1b****,** where the cell range expansion of a pico cell served by a pico BS 110b is implemented by means of a delta-parameter Δ. The expanded cell range of the pico BS 110b corresponds to the outermost cell edge 120b, while the conventional RSRP-based cell range of pico BS 110b corresponds to the innermost cell edge 120a. The pico cell is expanded without increasing its power, just by changing the reselection threshold. In one example, the UE 150 chooses the cell of pico BS 110b as the serving cell when RSRPb+Δ≥RSRPa, where RSRPa is the signal strength measured for the cell of macro BS 110a and RSRPb is the signal strength measured for the cell of pico BS 110b. The striped line 130a illustrates RSRPa from the macro BS 110a, the dotted line 130b illustrates RSRPb from the pico BS 110b corresponding to the cell range 120a, and the solid line 130c illustrates the received signal strength from the pico BS 110b corresponding to the cell edge of expanded cell range 120b. This results in a change from the conventional cell range 120a to an expanded cell range 120b when Δ>0. Such cell range expansion is of interest in heterogeneous networks, since the coverage of e.g. pico cells may otherwise be too small and the radio resources of these nodes may be underutilized. However, as a result a UE may not always be connected to the strongest cell when it is in the neighbourhood of a pico cell. The UE may thus receive a stronger signal from the interfering cell compared to the signal received from the serving cell. This results in a poor signal quality in downlink when the UE is receiving data at the same time as the interfering base station is transmitting.

### Interference Management for Heterogeneous Deployments

To ensure reliable and high-bit rate transmissions, as well as robust control channel performance, good signal quality must be maintained in wireless networks. The signal quality is determined by the received signal strength and its relation to the total interference and noise received by the receiver. A good network plan, which among other factors also includes cell planning, is a prerequisite for the successful network operation. However, a network plan is static. For more efficient radio resource utilization, the network plan has to be complemented at least by semi-static and dynamic radio resource management mechanisms, which are also intended to facilitate interference management, and deployment of advanced antenna technologies and algorithms.

One way to handle interference is, for example, to adopt more advanced transceiver technologies, e.g. by implementing interference cancellation mechanisms in terminals. Another way, which can be complementary to the former, is to design efficient interference coordination algorithms and transmission schemes in the network.

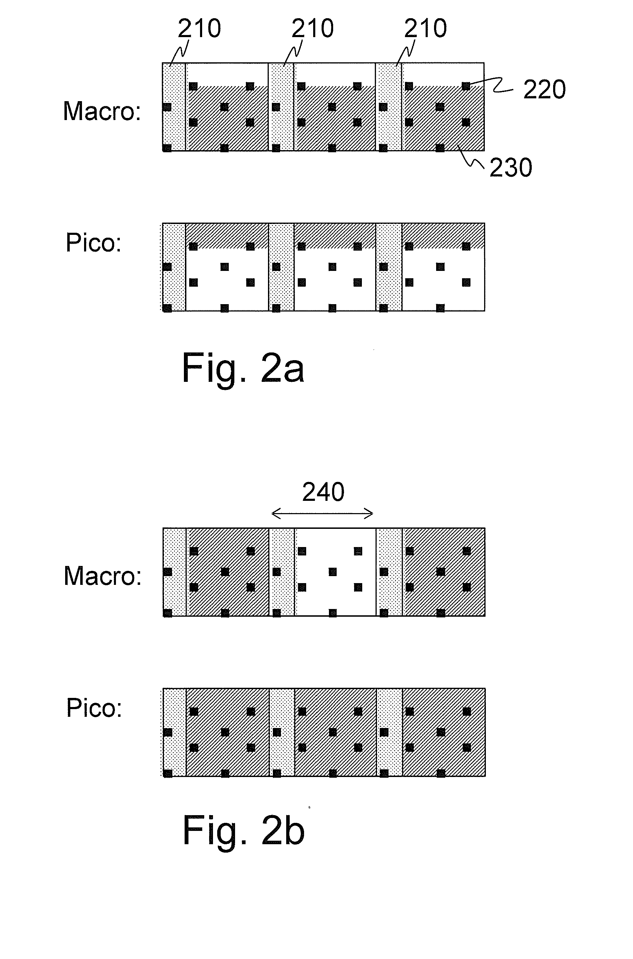

Inter-cell interference coordination (ICIC) methods for coordinating data transmissions between cells have been specified in LTE release 8, where the exchange of ICIC information between cells in LTE is carried out via the X2 interface by means of the X2-AP protocol. Based on this information, the network can dynamically coordinate data transmissions in different cells in the time-frequency domain and also by means of power control so that the negative impact of inter-cell interference is minimized. With such coordination, base stations may optimize their resource allocation by cells either autonomously or via another network node ensuring centralized or semi-centralized resource coordination in the network. With the current Third Generation Partnership (3GPP) specification, such coordination is typically transparent to user equipments (UEs). Two examples of coordinating interference on data channels are illustrated in **Figures 2a****-b.** The figures illustrate a frame structure for three subframes, carrying the periodically occurring Cell specific Reference Signals (CRS) 220, and with a control channel region 210 in the beginning of each subframe, followed by a data channel region 230. The control and data channel regions are white when not carrying any data and filled with a structure otherwise. In the first example illustrated in **Figure 2a**, data transmissions in two cells belonging to different layers are separated in frequency. The two layers may e.g. be a macro and a pico layer respectively. In the second example illustrated in **Figure 2b**, low-interference conditions are created at some time instances for data transmissions in pico cells. This is done by suppressing macro-cell transmissions in these time instances, i.e. in so called low-interference subframes 240, in order to enhance performance of UEs which would otherwise experience strong interference from macro cells. One example is when UEs are connected to a pico cell but are still located close to macro cells. Such coordination mechanisms are possible by means of coordinated scheduling, which allows for dynamic interference coordination. There is e.g. no need to statically reserve a part of the bandwidth for highly interfering transmissions.

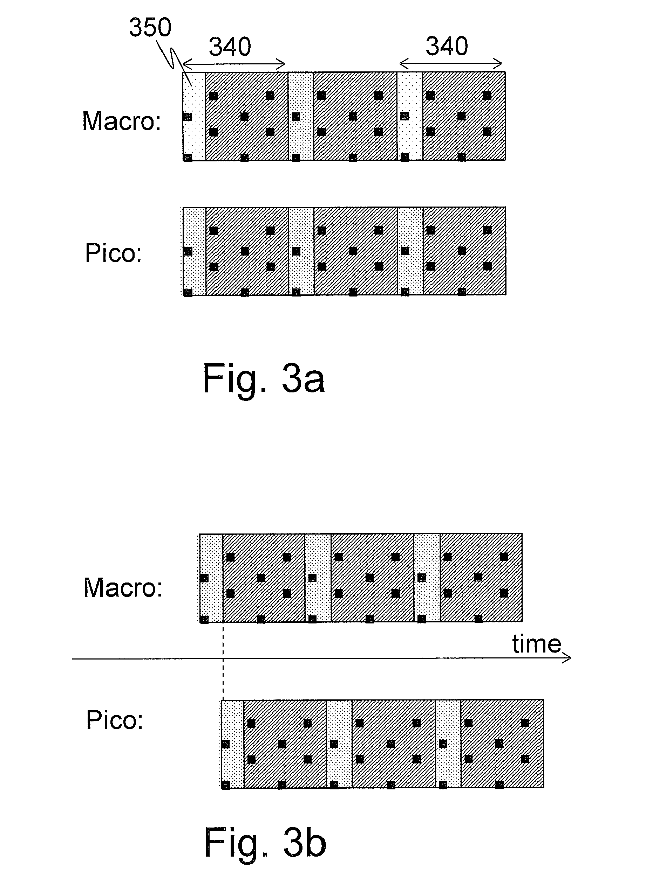

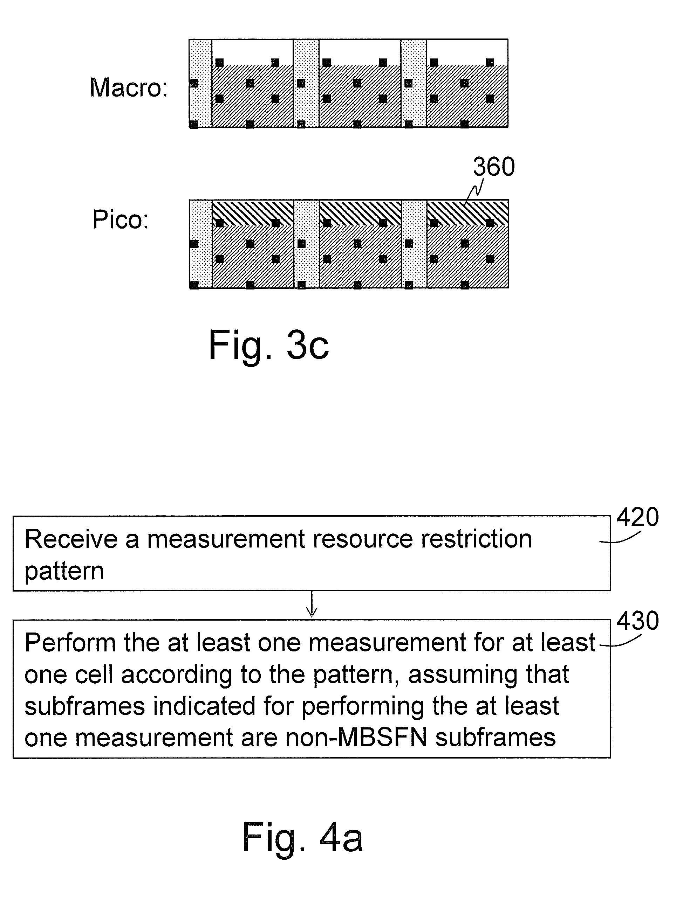

In contrast to user data, ICIC possibilities for control channels and reference signals are more limited. The mechanisms illustrated in **Figures 2a****-b** are e.g. not beneficial for control channels. Three known approaches of enhanced ICIC to handle the interference on control channels are illustrated in **Figures 3a****-c**, where the approaches illustrated in **Figures 3a** **and** **3c** require standardization changes while the approach illustrated in **Figure 3b** is possible with the current standard although it has some limitations for Time Division Duplex (TDD) systems, is not possible with synchronous network deployments, and is not efficient at high traffic loads. In **Figure 3a**, low-interference subframes 340 are used in which the control channels 350 are transmitted with reduced power for the channels, in **Figure 3b**, time shifts are used between the cells, and in **Figure 3c** in-band control channels 360 are used in combination with a control of the frequency reuse.

The basic idea behind interference coordination techniques as illustrated in **Figures 2a****-b** and **Figures 3a****-c** is that the interference from a strong interferer, such as a macro cell, is suppressed during another cell's - e.g. a pico cell's - transmissions. It is assumed that the pico cell is aware of the time-frequency resources with low-interference conditions and thus can prioritize scheduling in those subframes of the transmissions for users which are likely to suffer most from the interference caused by the strong interferers. The possibility of configuring low-interference subframes, also known as Almost Blank subframes (ABS), in radio nodes and exchanging this information among nodes, as well as time-domain restricted measurement patterns restricting UE measurements to a certain subset of subframes signaled to the UE, have recently been introduced in the 3GPP standard (TS 36.423 v10.1.0, section 9.2.54, and 3GPP TS 36.331 v10.1.0, section 6.3.6, respectively). An eNodeB may thus transmit ABS which are subframes with reduced power and/or reduced activity on some physical channels, in order to allow the UE to perform measurements under low-interference conditions.

With the approaches illustrated in **Figures 2a****-b** and **Figures 3a****-c**, there may still be a significant residual interference on certain time-frequency resources, e.g., from signals whose transmissions cannot be suppressed, such as CRS or synchronization signals. Some known techniques to reduce interference are:
- Signal cancellation, by which the channel is measured and used to restore the signal from a limited number of the strongest interferers. This has impacts on the receiver implementation and its complexity. In practice, channel estimation puts a limit on how much of the signal energy that can be subtracted.
- Symbol-level time shifting. This technique has no impact on the standard, but is not relevant e.g. for TDD networks and networks providing the Multimedia Broadcast Multicast Service (MBMS) service. This is also only a partial solution to the problem since it allows to distribute interference and avoid it on certain time-frequency resources, but not to eliminate it.
- Complete signal muting in a subframe. It could e.g. be not to transmit CRS and possibly also other signals in some subframes. This technique is non-backward compatible to Rel. 8/9 UEs which expect CRS to be transmitted, at least on antenna port 0 in every subframe, even though it is not mandated that the UE performs measurements on those signals every subframe.

Using MBSFN subframes with no MBMS transmissions, which will hereinafter be referred to as blank MBSFN subframes, is a backwards compatible approach that achieves the effect similar to that with complete signal muting, since no signals, not even CRS, are transmitted in the data region of a blank MBSFN subframe. Although CRS are still transmitted in the first symbol of the first slot of a blank MBSFN, using blank MBSFN subframes to avoid potential interference from strongly interfering cells may still be an attractive approach for at least some network deployments. There are, however, also issues with using MBSFN, at least in some scenarios, which are described in more detail below.

### Restricted measurement pattern configuration used for enhanced inter-cell interference coordination (eICIC)

To facilitate measurements in an expanded cell range, i.e., where high interference is expected, the standard specifies ABS patterns for eNodeBs, as described above, as well as restricted measurement patterns for UEs. An ABS pattern is a transmission pattern at the radio base station which is cell-specific. The ABS pattern may be different from the restricted measurement patterns signaled to the UE.

To enable restricted measurements for Radio Resource Management (RRM), Radio Link Management (RLM), Channel State Information (CSI), as well as for demodulation, the UE may receive the following set of patterns via Radio Resource Control (RRC) UE-specific signaling. The set of patterns are described in TS 36.331 v10.1.0, sections 6.3.2, 6.3.5, and 6.3.6:
- Pattern 1: A single RRM/RLM measurement resource restriction pattern for the serving cell.
- Pattern 2: One RRM measurement resource restriction pattern per frequency for neighbour cells (up to 32 cells). This measurement is currently only defined for the serving frequency.
- Pattern 3: A resource restriction pattern for CSI measurement of the serving cell with two subframe subsets configured per UE.

The pattern is a bit string indicating restricted subframes, where the pattern is characterized by a length and a periodicity. The restricted subframes are the subframes indicated by a measurement resource restriction pattern in which the UE is allowed or recommended to perform measurements. The length and periodicity of the patterns are different for Frequency Division Duplex (FDD) and TDD (40 subframes for FDD and 20, 60 or 70 subframes for TDD).

Restricted measurement subframes are configured to allow the UE to perform measurements in subframes with improved interference conditions. Improved interference conditions may e.g. be implemented by configuring ABS patterns at interfering radio nodes such as macro eNodeBs. A pattern indicating such subframes with improved interference conditions may then be signaled to the UE in order for the UE to know when it may measure a signal under improved interference conditions. The pattern may be interchangeably called a restricted measurement pattern, a measurement resource restriction pattern, or a time domain measurement resource restriction pattern. As explained above, an ABS is a subframe with reduced transmit power or activity. In one example, an MBSFN subframe may be an ABS, although it does not have to be an ABS and the MBSFN subframe may even be used for purposes other than interference coordination in the heterogeneous network. ABS patterns may be exchanged between eNodeBs, e.g., via X2, but these eNodeB transmit patterns are not signaled to the UE. However, an MBSFN configuration is signaled to the UE, as will be described hereinafter.

### MBMS and MBSFN

MBMS transmission may be offered in mixed MBMS and unicast cells or in MBMS dedicated cells. Further, the following two main scenarios with respect to MBMS transmission may occur:
- Single cell MBMS transmission;
- Multi-cell MBMS transmission.

In LTE, MBMS can be provided with single frequency network mode of operation only on a frequency layer shared with non-MBMS services, i.e. a set of cells supporting both unicast and MBMS transmissions, or so called MBMS/Unicast-mixed cells, which are further referred to as mixed cells [3GPP TS 36.300, section 15].

For all single cell or cell specific MBMS transmission a Multicast Control Channel (MCCH) can be sent on the Downlink Shared Channel (DL-SCH). The MBMS notification shall be sent on layer1/layer2 (L1/L2) control channel. The corresponding MBMS service, i.e. the Multicast Traffic Channel (MTCH) shall also be mapped onto DL-SCH.

MBMS multi-cell scenario should support single frequency network (SFN), enabling SFN combining, i.e. combining in the air. This means the same service should be sent on the same physical resource in all the multi-cells, which are SFN combined. Similarly the MBMS control channel should also be SFN combined, i.e. it must also share the same physical resources in all combined cells. Secondly all the resource blocks containing MBMS shall use the common scrambling code in all the mixed cells within the SFN area. It should be noted that the unicast and multi-cell MBMS services can be multiplexed in the time domain, in the frequency domain, or in combination thereof.

In a dedicated MBMS cell scenario only MBMS service is transmitted. This is typically only a multi-cell transmission scenario. The MBMS services are sent over the entire SFN area using the same resource blocks in all the cells to facilitate SFN combining. Similarly the MBMS control channel should also be SFN combined.

Multi-cell MBMS transmission in mixed cells is quite similar to the transmission in MBMS dedicated cells, which allows for similar solutions for MBMS control information transmission and activation in the two scenarios.

Cells configuring MBSFN but not contributing to the MBSFN transmission within an MBSFN area are also referred to as MBSFN Area Reserved Cells. An MBSFN Synchronization Area is an area of the network where all eNodeBs can be synchronized and perform MBSFN transmissions. MBSFN Synchronization Areas are capable of supporting one or more MBSFN Areas. On a given frequency layer, an eNodeB can only belong to one MBSFN Synchronization Area. MBSFN Synchronization Areas are independent from the definition of MBMS Service Areas.

MBSFN transmission or a transmission in MBSFN mode is a simulcast transmission technique realized by transmission of identical waveforms at the same time from multiple cells. An MBSFN transmission from multiple cells within the MBSFN area is seen as a single transmission by a UE.

An MBSFN area comprises a group of cells within an MBSFN Synchronization Area of a network, which are coordinated to achieve an MBSFN transmission. Except for the MBSFN Area Reserved Cells, all cells within an MBSFN Area contribute to the MBSFN transmission and advertise its availability. The UE may only need to consider a subset of the MBSFN areas that are configured, i.e. when it knows which MBSFN area applies for the service(s) it is interested to receive.

### MBSFN configuration in the serving cell

A limited amount of MBMS control information is provided on the Broadcast Control Channel (BCCH). This information comprises information needed to acquire the MCCHs. This information is carried by means of a single MBMS specific System Information Block (SIB), the SIBType13 (SIB13). An MBSFN area is identified solely by the mbsfn-Areald in SIB13. At mobility, the UE considers that the MBSFN area is continuous when the source cell and the target cell broadcast the same value in the mbsfn-Areald.

When MBMS service is not used in the cell, MBSFN subframe configuration for blank MBSFN subframes may still be acquired from SIBType2 (SIB2) in *mbsfn-SubframeConfigList* Information Element (IE). The *mbsfn-SubframeConfigList* IE is a set of elements of type *MBSFN-SubframeConfig.* The number of elements may be up to a number defined by the parameter *maxMBSFN-Allocations,* which corresponds to the maximum number of MBSFN frame allocations with different offsets. *maxMBSFN-Allocations* is equal to eight. The IE *MBSFN-SubframeConfig* defines subframes that are reserved for MBSFN in downlink, and is shown in the table below:

```
 -- ASN1START
 MBSFN-SubframeConfig ::=          SEQUENCE {
  radioframeAllocationPeriod       ENUMERATED {n1, n2, n4, n8, n16, n32},
  radioframeAllocationOffset       INTEGER (0..7),
  subframeAllocation               CHOICE {
     oneFrame                                BIT STRING (SIZE(6)),
     fourFrames                              BIT STRING (SIZE(24))
  }
  }
  -- ASN1STOP
```

### MBSFN configuration in neighbour cells

The neighbour cell MBSFN configuration indicators are comprised in *NeighCellConfig* IE. The *NeighCellConfig* IE may be signaled over RRC for intra-frequency cells in SIB3, and for inter-frequency cells in SIB5, or as a part of the measurement configuration for intra- or inter-frequency E-UTRA cells in the *MeasObjectEUTRA* IE. The values of the *neighCellConfig* IE are defined as follows:
- 00: Not all neighbour cells have the same MBSFN subframe allocation as the serving cell on this frequency, if configured, and as the Primary Cell (Pcell) otherwise;
- 10: The MBSFN subframe allocations of all neighbour cells are identical to or subsets of that in the serving cell on this frequency, if configured, and of that in the PCell otherwise;
- 01: No MBSFN subframes are present in all neighbour cells.

MBSFN indicators provided with *NeighCellConfig* IE in SIB3, SIB5 and in the measurement configuration *MeasObjectEUTRA* IE are the only currently standardized means to obtain the MBSFN configuration in neighbour cells without explicit reading of the system information of the neighbour cells. The amount of the information provided with *NeighCellConfig* is very limited and does not always unambiguously determine the MBSFN configuration in neighbour cells.

In general, the UE applies the system information acquisition, and change monitoring procedures only for the serving cell or the Primary Cell (PCell) in a network using Carrier Aggregation (CA). For neighbour cells or Secondary Cells (SCells) in a CA network, E-UTRAN provides all system information relevant for operation in RRC_CONNECTED via dedicated signaling when adding the neighbour cell or SCell. Upon change of the relevant system information of a configured SCell, E-UTRAN releases and subsequently adds the concerned SCell, which may be done with a single RRCConnectionReconfiguration message.

### Using blank MBSFN

As already mentioned above, using blank MBSFN subframes is a backwards compatible approach that achieves an effect of lowered interference similar to that of complete signal muting, since no signals are transmitted in the data region of a blank MBSFN subframe, except for the CRS in the first time slot. However, at least the following problems may arise when using blank MBSFN in the network:
- Using blank MBSFN implies a reduced number of occasions for data transmissions in a cell configuring blank MBSFN. The gain from the reduced interference in the network may not always compensate for the throughput loss due to the unused subframes, which is a classical trade-off in networks employing radio resource reuse. Blank MBSFN subframes shall thus not be overused.
- Not all subframes may be configured as MBSFN subframes. In FDD only subframes 1, 2, 3, 6, 7 and 8 may be configured as MBSFN, and in TDD only subframes 3, 4, 7, 8 and 9. This limits network flexibility, and leaves a still unresolved interference issue in the subframes where MBSFN may not be configured.
- With eICIC, blank MBSFN subframes cannot be configured simultaneously in all cells since the UE will likely not be able to perform measurements in that case. Therefore methods for coordinating MBSFN subframe configuration over cells are necessary. Although CRS-based measurements would still be possible in such a scenario, CRS is only transmitted in the first symbol of the MBSFN subframe which provides a limited measurement possibility. Furthermore, there will still be interference at least from other-cell CRS in the first time slot, so such measurements will most likely not fulfill the measurement requirements.
- When a UE is expected to perform measurements according to a measurement pattern, such as a restricted measurement pattern for a neighbour cell for performing RRM measurements using eICIC, the UE may need to be aware of the MBSFN configuration, as well as the usage of blank MBSFN subframes for other purposes than eICIC in the cell to be measured. The cell to be measured is e.g. the cell associated with the measurement pattern. Currently the UE is not aware of the MBSFN configuration in neighbour cells, at least not in a general case. The current signaling does not provide the UE with information about cell-specific or cell-group specific MBSFN configuration and not about configured MBSFN subframes. This becomes especially challenging when the network is not frame aligned and not system frame number aligned, i.e. when the beginning of frames and system frame number 0 (SFN0), respectively, does not coincide in multiple or all cells. Furthermore, the UE is not aware of whether neighbour-cell MBSFN subframes in a specific cell coincide with the restricted measurement subframes indicated by the neighbour-cell measurement pattern. Such a pattern is common for multiple cells. This is a problem as it is necessary for the UE to know e.g. in which cells the reference signals are transmitted not just in the first time slot. If the UE only knows that MBSFN is used in at least one cell, this may prevent the UE from measuring all other cells as well. This problem does not exist with non-MBSFN based ABS as reference signals are transmitted in the cells transmitting such ABS.
- It is not possible to configure blank MBSFN in any one of two cells which are expected to be measured in parallel, i.e. measurement patterns relying on using MBSFN cannot be simply aligned in such scenarios when the UE is not aware of the cell MBSFN configuration.
- As already mentioned, blank MBSFN subframes may be used for multiple purposes, such as for:
   ∘ positioning, and may thus comprise Positioning Reference Signals (PRS),
   ∘ relays, and may thus contain e.g. over-the-air backhaul transmissions,
   ∘ other over-the-air backhaul transmissions between lower-power nodes, e.g. home BSs or pico eNodeBs.

### SUMMARY

An object is therefore to address some of the problems and disadvantages outlined above, and to improve the possibilities to perform measurements when MBSFN subframes are used in a system.

The above stated object is achieved by means of methods and apparatuses according to the independent claims.

In accordance with an embodiment, a method in a network node of a communications system for enabling measurements performed by a wireless device when MBSFN subframes are configured in the system, is provided. The method comprises determining a measurement resource restriction pattern indicating subframes for performing at least one measurement for at least one cell. The indicated subframes are non-MBSFN subframes. The method also comprises transmitting the measurement resource restriction pattern to the wireless device, for enabling measurements for the at least one cell according to the pattern.

In accordance with another embodiment, a network node of a communications system configured to enable measurements performed by a wireless device when MBSFN subframes are configured in the system is provided. The network node comprises a processing unit configured to determine a measurement resource restriction pattern indicating subframes for performing at least one measurement for at least one cell. The indicated subframes are non-MBSFN subframes. The network node also comprises a communication unit configured to transmit the measurement resource restriction pattern to the wireless device, for enabling measurements for the at least one cell according to the pattern.

In accordance with still another embodiment, a method in a wireless device of a communications system for performing measurements when MBSFN subframes are configured in the system is provided. The method comprises receiving, from a first network node, a measurement resource restriction pattern indicating subframes for performing at least one measurement. The method further comprises performing the at least one measurement for at least one cell of a first cell of the first network node and at least one neighbour cell according to the pattern, assuming that subframes indicated for performing the at least one measurement are non-MBSFN subframes.

In accordance with a further embodiment, a wireless device of a communications system adapted to perform measurements when MBSFN subframes are configured in the system is provided. The wireless device comprises a processing unit adapted to receive from a first network node, a measurement resource restriction pattern indicating subframes for performing at least one measurement. The processing unit is also adapted to perform the at least one measurement for at least one cell of a first cell of the first network node and at least one neighbour cell according to the pattern, assuming that subframes indicated for performing the at least one measurement are non-MBSFN subframes.

In accordance with another embodiment, a method in an RBS of a communications system, for enabling measurements performed by a wireless device served by the RBS, when MBSFN subframes are configured in the system, is provided. The method comprises transmitting, to the wireless device, a measurement resource restriction pattern indicating subframes for performing at least one measurement, wherein the indicated subframes are non-MBSFN subframes. The method also comprises transmitting a list of cells for which the measurement resource restriction pattern applies.

In accordance with a further embodiment, an RBS of a communications system, configured to enable measurements performed by a wireless device served by the RBS, when MBSFN subframes are configured in the system, is provided. The RBS comprises a transmitter configured to transmit, to the wireless device, a measurement resource restriction pattern indicating subframes for performing at least one measurement, wherein the indicated subframes are non-MBSFN subframes. The transmitter is also configured to transmit a list of cells for which the measurement resource restriction pattern applies.

An advantage of particular embodiments is that it is ensured that the UE has sufficient opportunities to perform measurements and thus that the measurement performance is met when the UE performs restricted measurements and MBSFN is configured in at least one neighbor cell. It is therefore possible to configure MBSFN subframes and use restricted measurement subframes in the same network, and eICIC is thus enabled in networks using blank MBSFN subframes for various purposes.

A further advantage of embodiments is that neighbour-cell MBSFN configuration awareness is improved. Furthermore, a measurement failure probability is reduced or avoided when MBSFN subframes are configured in the measured cell, which results in improved measurement performance.

### BRIEF DESCRIPTION OF THE DRAWINGS

**Figure 1a** is a schematic illustration of an LTE network.
**Figure 1b** is a schematic illustration of cell range expansion in heterogeneous networks.
**Figures 2a****-b** are schematic illustrations of ICIC for data channels.
**Figures 3a****-c** are schematic illustrations of ICIC for control channels.
**Figures 4a****-d** are flowcharts of the method in the wireless device according to embodiments.
**Figures 5a****-b** are block diagrams schematically illustrating a wireless device according to embodiments.
**Figures 6a****-c** are flowcharts of the method in the network node according to embodiments.
**Figures 7a****-c** are block diagrams schematically illustrating a network node according to embodiments.
**Figures 8a****-c** are flowcharts of the method in the RBS according to embodiments.
**Figure 9** is a block diagram schematically illustrating an RBS according to embodiments.

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

The terminology of blank MBSFN subframe used herein shall be understood in a general sense as a block of time-frequency resources that may be used for multicast/broadcast data transmissions, such as MBMS in LTE which may or may not be single-frequency, but which are configured for not being used for such multicast/broadcast data transmissions. The purpose of configuring blank MBSFN subframes may be e.g. interference mitigation using eICIC. However, the blank MBSFN subframes may also be used for other purposes, e.g., positioning or backhaul signaling. Blank MBSFN subframe usage may thus be used to facilitate measurements with different network or user services.

The methods disclosed herein are described with more focus on heterogeneous deployments, which shall not be viewed as a limitation of the invention, and shall not be limited to the 3GPP definition of heterogeneous network deployments. For example, the methods could be well adopted also for traditional macro deployments and/or networks operating more than one Radio Access Technology (RAT) not using MBMS services or using MBMS only in a part of the network or only on a subset of available system time-frequency resources. Finally, while the techniques disclosed herein are described in connection with LTE systems as standardized by 3GPP, these techniques are by no means limited exclusively to these systems, but may be adapted to other wireless communication systems with relevant similarities. Embodiments may apply with any radio access network, single- or multi-RAT, such as LTE-Advanced, UMTS, GSM, cdma2000, WiMAX, and WiFi.

The signaling described herein is done either via direct links or via logical links, e.g. via higher layer protocols and/or via one or more network nodes. Although the description is given for UE as a measuring unit, it should be understood that UE is a non-limiting term which means any wireless device that has a measurement capability, such as a personal digital assistant, a laptop, a mobile, sensor, a fixed relay, a mobile relay, or even a radio base station. The disclosed methods may apply also for CA-capable UEs in its general sense, as described above.

A cell is associated with a radio node, where radio node, radio network node, BS, or eNodeB are used interchangeably in the description. The radio node comprises in a general sense any node transmitting radio signals used for measurements, such as an eNodeB, a macro/micro/pico BS, a home eNodeB, a relay, a beacon device, or a repeater. A radio node herein may comprise a radio node operating in one or more frequencies or frequency bands. It may be a radio node capable of CA. It may also be a single- or muti-RAT node which may e.g. support multistandard radio (MSR) or may operate in a mixed mode.

This disclosure comprises a description of methods and apparatus for enhanced measurement performance using blank MBSFN subframes. One aspect comprises procedures and pre-defined rules implemented in a network node and in a wireless device to ensure that no measurements are performed in a blank MBSFN subframe on signals that are not present in this subframe, or at least that the likelihood of measurements of non present signals in a subframe is minimized. The network node may be any one of: a radio network node such as an eNodeB, a relay, or a home BS, or another network node such as a controlling node, an operation and maintenance node, a self organizing node, or a positioning node. The applicability of the procedures and pre-defined rules are described hereinafter for certain scenarios and services, such as eICIC and positioning.

Another aspect comprises signaling procedures that increase the awareness in a node about the MBSFN configuration of neighbour cells. The signaling procedures may convey information about cell-specific MBSFN configuration, configuration of blank MBSFN subframes not used for MBMS, use of blank MBSFN subframes for other purposes, and other information described hereinafter. Still another aspect comprises measurement procedures and requirements in networks using MBSFN, and blank MBSFN subframes in particular, e.g. for interference mitigation.

A further aspect comprises procedures for requirements testing with blank MBSFN subframes.

### Radio Measurements

The measurements to which the methods described herein relate to may be any of intra-frequency, inter-frequency, inter-band or inter-RAT measurements. The measurements may be performed with or without measurement gaps. The measurements may also be performed according to one or more measurement patterns. As an example a restricted measurement pattern may be configured for performing RRM measurements on a neighbour cell to enable eICIC. The pattern may be signaled to the UE as described above.

The measurements affected by configuring blank MBSFN subframes are typically downlink measurements as well as measurements involving both downlink and uplink, such as timing advance Type 1 or Round Trip Time (RTT) measurements.

Some more examples of measurements are given below:
- Signal strength and signal/channel quality measurements, such as Reference Signal Received Power (RSRP), Reference Signal Received Quality (RSRQ), UTRA Common Pilot Channel (CPICH) Received Signal Code Power (RSCP), CDMA2000 pilot strength;
- Channel state or quality measurements, such as Channel Status Information (Channel Quality Indicator, Precoding Matrix Indicator, Rank Indicator);
- Timing measurements, such as receive-transmit timing difference and related measurement types (UE Rx-Tx timing difference, timing advance Type 1, timing advance Type 2, RTT), Reference Signal Timing Difference (RSTD), and time of arrival;
- Direction measurements such as Angle of arrival (AoA).

The measurements may be performed on:
- Physical signals, such as synchronization signals used for cell search;
- Reference signals, such as CRS or PRS;
- Control channels and broadcast channels, such as physical control channels (e.g. PDCCH), and system or multicast information transmitted over a Physical Broadcast Channel (PBCH);
- Data channels, which may be used for data or control information transmissions.

### Rules for MBSFN configuration in neighbour cells

With the existing signaling, only very limited information about MBSFN configuration in neighbour cells is available over RRC [TS 36.331, v10.1.0, section 6.3.6] as described above. In some cases, this information does not unambiguously define an MBSFN subframe configuration in the neighbour cells, i.e. the MBSFN configuration of neighbour cells is unknown or not uniquely defined. Information is available in *neighCellConfig* element in SIB3 and SIB5 for intra-frequency and inter-frequency, respectively, as well as in *MeasObjectEUTRA* used for measurement configuration of intra- or inter-frequency E-UTRA cells.

In embodiments, at least one of the following rules may be implemented:
- The network node transmits the *neighCellConfig* which comprises the information only for cells indicated for restricted measurements, which may be e.g. the cells listed in *measSubframeCellList* for *measSubframePatternConfigNeigh.*
- The network avoids configuring restricted measurement patterns that indicate for measurements the subframes that may be used for MBSFN subframes - with or without MBMS - in one or more cells to be measured. In this way the UE will never be told to measure in an MBSFN subframe, and will thus e.g. not risk measuring a CRS which is not present in the subframe. This is thus a network based solution to the problem. As an example embodiment, the following rule may be implemented in a network node: subframes 1, 2, 3, 6, 7, 8 for LTE FDD and subframes 3, 4, 7, 8, 9 for LTE TDD, which are the subframes that may be configured for MBSFN according to the 3GPP standard, cannot be indicated by a restricted measurement pattern for measurements on a cell. The pattern may e.g. be a pattern used for eICIC sent by the serving cell to the UE via RRC, and the cell may e.g. be a neighbour cell.
- The UE assumes that MBSFN subframes are used in all the cells indicated for restricted measurements unless the MBSFN configuration is unambiguous, e.g., it receives the information that no neighbour cells are using MBSFN. *neighCellConfig*='01' indicates that no neighbour cells are using MBSFN, as mentioned above. Such a rule may apply separately for intra-frequency cells and inter-frequency cells or even per frequency.

### Rules when MBSFN configuration overlaps with restricted subframes

As stated above, the MBSFN pattern can be configured in an aggressor cell to reduce interference in the victim cells. An aggressor cell is a high power cell, e.g. a macro cell, which interferes during a measurement performed in a target cell, also called the victim cell, which is a low power cell such as a pico cell. However, it should be noted that a same cell may be both an aggressor cell and a victim cell. One example of this situation is Closed Subscriber Group (CSG) femto cells, where a macro cell is an aggressor for a femto UE in the expanded cell range, while a femto cell is the aggressor for a macro UE within the coverage of the CSG femto cell. This is due to that the macro UE may be very close to the femto base station without being served by it, if the UE does not belong to the CSG. In yet another example a UE served by a macro cell may be requested to perform measurements on one or more neighboring pico cells. Therefore the signals transmitted by the macro cell, which is the serving cell of this UE, will interfere with the signals received from the pico cell(s) used for performing the measurements. The MBSFN subframes in an aggressor cell overlap with the restricted subframes over which the UE performs one or more measurements (e.g. RSRP, RSRQ, RLM, cell identification, or system acquisition) in the victim cell. The reduced interference makes it easier for the UE to perform these measurements during the restricted subframes or restricted time instances. However, using blank MBSFN subframes may make the UE and network nodes behavior unclear, unspecified or contradicting in some scenarios, as explained below. This problem is addressed in the embodiments described hereinafter.

In one scenario, the serving cell may signal or provide limited information indicating that at least one of the neighbour cells uses MBSFN configuration. In a second scenario the network may also signal the serving cell MBSFN configuration, e.g. indicating that no MBSFN subframes are used in the serving cell. The network may in addition signal the known indicator indicating that the neighbour cell and the serving cell MBSFN configurations are different. In a third scenario the network can signal only the known indicator indicating that the neighbour cell and the serving cell MBSFN configurations are different, i.e. without informing about the serving cell MBSFN configuration. In both the second and the third scenarios, the known indicator is called *neighCellConfig*, which can be set to 00. As described above, *neighCellConfig =* 00 means that not all neighbour cells have the same MBSFN subframe allocation as the serving cell on this frequency, if configured, and as the PCell otherwise. Conventionally, the rule applied in these cases is that the UE should assume that all neighbour cells use all MBSFN-configurable subframes for MBSFN transmission. In case the restricted subframes are configured such that they coincide with MBSFN subframes, the consequence of such a rule is that the UE may not perform measurements in any of the restricted subframes (e.g., indicated by a time-domain measurement resource restriction pattern used for eICIC, as defined in TS 36.331, section 6.3.6). In this case the UE may thus not measure on any of restricted subframes 1, 2, 3, 6, 7, 8 for LTE FDD and any of restricted subframes 3, 4, 7, 8, 9 for LTE TDD, which are MBSFN-configurable subframes, according to the standard [3GPP TS 36.211]. In order to lower interference to the victim cell, it is quite likely that the restricted subframes configured for performing the measurements on the victim cell fully or partially overlap with MBSFN subframes configured in an interfering aggressor cell. The consequence is thus that the UE may not perform the measurement on the victim neighbor cell at all since it believes that these subframes are MBSFN subframes. Furthermore, the UE behavior may not be consistent as it is told to measure according to the measurement pattern, and at the same time it is told not to measure when the system infirmation indicates that at least some neighbor cells are using MBSFN, to avoid a measurement of a signal that does not exist. To solve this problem a rule which ensures consistent UE behavior may be specified as described hereinafter. Such a rule may be applied for intra-frequency, inter-frequency, or inter-RAT measurements. It may also be applicable for carrier aggregation, and may be pre-determined.

Furthermore, according to the currently specified UE behavior, the UE will measure only in the first OFDM symbol of the neighbor cell restricted subframes which are potentially MBSFN, when it receives the measurement resource restriction pattern for neighbor cell measurement and an indicator indicating that not all neighbor cells have the same MBSFN configuration as a serving cell or a primary cell of the UE. This has serious implication on the measurement performance of the restricted measurements on neighbor cells. For instance the measurement accuracy will become extremely poor leading to inaccurate measurement reports. This is because the UE will perform measurements on only 25% of the available CRS. The measurement reports are used by the network for mobility decisions e.g. handover, Pcell change. The inaccurate measurement results may thus result in incorrect mobility decisions, call dropping, or handover failures. The UE may also not meet the pre-defined requirements especially when a received signal quality of a signal from a neighbor cell where the measurement is done is low. Such a UE may thus not be considered compliant to the standard and may also fail the conformance tests. Therefore appropriate UE behavior in such scenario needs to be specified to ensure that all possible OFDM symbols containing the CRS are available for measurements.

According to one exemplary embodiment, when the UE is explicitly requested by higher layers to perform measurement(s) over restricted or designated subframes or specific time instance, the UE shall perform the measurements requested by the network during the restricted subframes or time instances which correspond to MBSFN subframes, regardless of whether MBSFN subframes are configured or not in the serving or in any of the neighbour cells. This can also be explained as follows: The UE shall override or prioritize the restricted subframes over the MBSFN configuration in a cell when the UE is explicitly requested by the network to perform measurements on that cell using the restricted subframes. This rule can also be applied to any system where the UE is requested to perform measurements on specific time instances in a cell and where such measurement instances overlap with MBSFN in an aggressor cell. Hence this rule can be extended to Observed Time Difference Of Arrival (OTDOA) positioning methods, where the UE performs positioning measurements such as RSTD measurements in subframes transmitting PRS in a cell, where the PRS subframes may overlap with MBSFN subframes in the aggressor cell.

According to some embodiments, the UE may then also perform measurements on the first-symbol CRSs in blank MBSFN subframes, as CRS signals are typically transmitted only in the first symbol of a blank MBSFN subframe.

In another embodiment applicable to at least FDD, the network can configure the restricted subframe pattern for the target cell to be measured such that it is not one of the MBSFN subframes. However, at the same time the configured restricted subframes for measurement on the target cell should still overlap with the MBSFN subframes in the aggressor cell in order to achieve low-interference conditions. This may be achieved by shifting in time the subframes between the aggressor cell and measured target cell. For example, the restricted subframe for measurement can be every subframe # 4 in a frame in the target cell. By shifting the subframes by two between aggressor and measured cells, the subframe # 4 can be made to overlap with aggressor cell subframe # 2 which is an MBSFN subframe with no data.

In a fourth scenario, the serving cell may not provide any information related to the use of the MBSFN pattern in any of the aggressor neighbour cells. In this case the UE can measure on the victim cells over restricted subframes. However, the UE may also have to measure on the aggressor cell in a normal manner, i.e. regardless of the restricted measurement pattern in any of the subframes. In this case the UE measurements on the aggressor cell in blank MBSFN subframes are inappropriate, as there is only the CRS in the first time slot of a blank MBSFN subframe. There are two solutions to this problem. In a first solution the UE assumes that MBSFN is used in a cell which is strongest compared to its serving cell. This can be determined at the time of cell search. For RSRP/RSRQ/RLM and other measurements the UE may then measure only in non-MBSFN subframes or symbols in such an aggressor cell. It is likely that the aggressor cell is strongest compared to the UE's serving cell, in particular when the UE performs measurements on at least the serving cell in restricted subframes, i.e. in a heterogeneous network scenario. In a second solution the serving cell may provide explicit information, or signals an indicator or identifier, of the aggressor cell. The serving cell may also signal an additional indicator that the aggressor cell uses a low interference MBSFN pattern. These rules may also be applied to any system, and in particular for OTDOA measurements on the PRS subframes, when an aggressor cell uses MBSFN patterns. In this case the UE should detect the aggressor cell and avoid doing measurements in MBSFN subframes on signals that are not transmitted in MBSFN subframes. One example ismobility measurements that are typically performed on CRS, as CRS are not transmitted in the data field of MBSFN subframes.

### Enhanced signaling for MBSFN configuration

In another embodiment, the problem may also be resolved, at least in part, by the new signaling described herein. The new signaling may e.g. comprise a set of indicators accounting for the overlap between configured MBSFN subframes and subframes indicated for measurements. More information is provided hereinafter.

Enhanced signaling procedures are provided for signaling the information related to MBSFN configuration. The methods increase the awareness in a node regarding the MBSFN configuration of neighbour cells, e.g., about configuring blank MBSFN subframes for a certain cell or a group of cells or about using blank MBSFN subframes for other purposes. The node may be a UE or a network node which may also be a radio network node.

The enhanced MBSFN configuration information comprises any one or a combination of:
- MBSFN bandwidth configuration, e.g. in the network when different cells may use different system bandwidth or different measurement bandwidth;
- Carrier frequency and/or frequency band with configured MBSFN subframes or subframes that may be used for enhanced MBMS service, e.g. with carrier aggregation;
- MBSFN usage description, e.g. MBSFN subframes used for MBMS, positioning, eICIC, relays, and backhaul signaling;
- MBSFN usage indicator, e.g. true when at least some blank MBSFN subframes may contain in the MBSFN data region other non-MBSFN signals e.g. PRS ;
- MBSFN configuration, such as in *MBSFN-SubframeConfig* or similar, e.g. indicating at least some configured MBSFN subframes in the cell, provided together with the measurement configuration information, e.g. in *MeasObjectEUTRA*;
- Superset of MBSFN subframe patterns used in neighbour cells indicated by the restricted measurement pattern for neighbour cells;
- An indication on whether the configured MBSFN subframes in a cell, e.g. a neighbour cell, coincide with a restricted measurement pattern. One example is an indication on whether the configured MBSFN subframes in any neighbour cell or at least one neighbour cell, coincide with a restricted measurement pattern configured for neighbour cells. For example, a set of indicators similar to *neighCellConfig* may be signaled to the UE, where the semantics of the indicators is changed to account for configured MBSFN subframes colliding with the restricted measurement subframes indicated for measurements. '00' may e.g. mean *'in at least one neighbour cell the configured MBSFN subframes overlap with the subframes indicated for measurements on neighbour cells*', '10' may mean *'in no neighbour cell the configured MBSFN subframes overlap with the subframes indicated for measurements on neighbour cells',* and so on.

The new MBSFN configuration information described herein may be:
- UE-specific;
- UE-group specific;
- Cell specific, e.g., associated with a cell identification;
- Cell-group specific, e.g., a cell group comprising macro cells, a cell group comprising femto cells, a cell group comprising Closed Subscriber Groups (CSG) cells, a cell group of explicitly listed cell identifications;
- Area-specific, e.g., an area associated with a synchronization area or a geographical area or a part of the cell such as inner part of the cell or cell edge;
- Associated with a RAT, e.g. LTE.

The above described signaling may be between the following nodes in either direction:
- A radio network node (e.g., eNodeB, femto BS, pico eNodeB, RNC) and a UE, e.g. via RRC or a an indicator signaled over a physical channel;
- A network node (e.g. positioning node or coordinating node) and a UE, e.g. via LPP;
- Two radio network nodes, e.g., via X2;
- A radio network node and a network node (e.g., Mobility Management Entity (MME), positioning node, operation and maintenance (O&M), Self-Organizing Network (SON) or a coordinating node);
- Two network nodes, e.g. between an O&M node and a positioning node, or between an O&M node and a coordinating node;
- Two UEs, e.g. one UE transmitting a cell configuration comprising MBSFN configuration to another UE;
- A node associated with one RAT and another node associated with another RAT, e.g. via standardized or proprietary interface or by means of cross-layer communication (e.g. in MSR nodes or mixed nodes), where the two nodes may be comprised in a third node.

The nodes listed above may use any RAT, e.g. a UE served in GSM may be provided MBSFN information about at least one LTE cell via its serving GSM cell to enable the UE inter-RAT measurements for the cell using MBSFN in the LTE cell to be measured.

Embodiments provide the advantage of reducing or avoiding measurement failure probability when MBSFN subframes are configured in the measured cell. The enhanced signaling procedures make the UE aware of cell-specific or cell-group specific MBSFN subframe configuration. Furthermore, it enables the use of eICIC in networks using blank MBSFN subframes. Moreover, measurements and network performance are optimized when blank MBSFN subframes are used for multiple purposes in the same network or in the same area.

**Figure 4a** is a flowchart of a method in a wireless device, such as a UE, of a communications system, for performing measurements when MBSFN subframes are configured in the system, according to embodiments. The method comprises:
- 420: Receiving, from a first network node, a measurement resource restriction pattern indicating subframes for performing at least one measurement. In one embodiment, the measurement resource restriction pattern is determined by the first network node. In an alternative embodiment, the measurement resource restriction pattern is determined by a positioning node, such as an Evolved Serving Mobile Location Center (E-SMLC) in the LTE system, which forwards the pattern to the first network node. The at least one measurement may be any of the above described measurements performed by a wireless device (see section *"Radio Measurements*"). In one embodiment, the measurement performed by the wireless device is at least one of: a signal strength measurement, a signal quality measurement, a channel state measurement, a channel quality measurement, a timing measurement, and a direction measurement. Furthermore, the received measurement resource restriction pattern may be at least one of a time domain pattern, a positioning subframe pattern, used for e.g. OTDOA measurements, and a pattern for backhaul communication.
- 430: Performing the at least one measurement for at least one cell of a first cell of the first network node and at least one neighbour cell according to the pattern, assuming that subframes indicated for performing the at least one measurement are non-MBSFN subframes. In one embodiment the first cell is the serving cell of the wireless device, and the first network node is e.g. a radio network node. Alternatively the first cell is the primary cell of the wireless device, in a carrier aggregation situation.

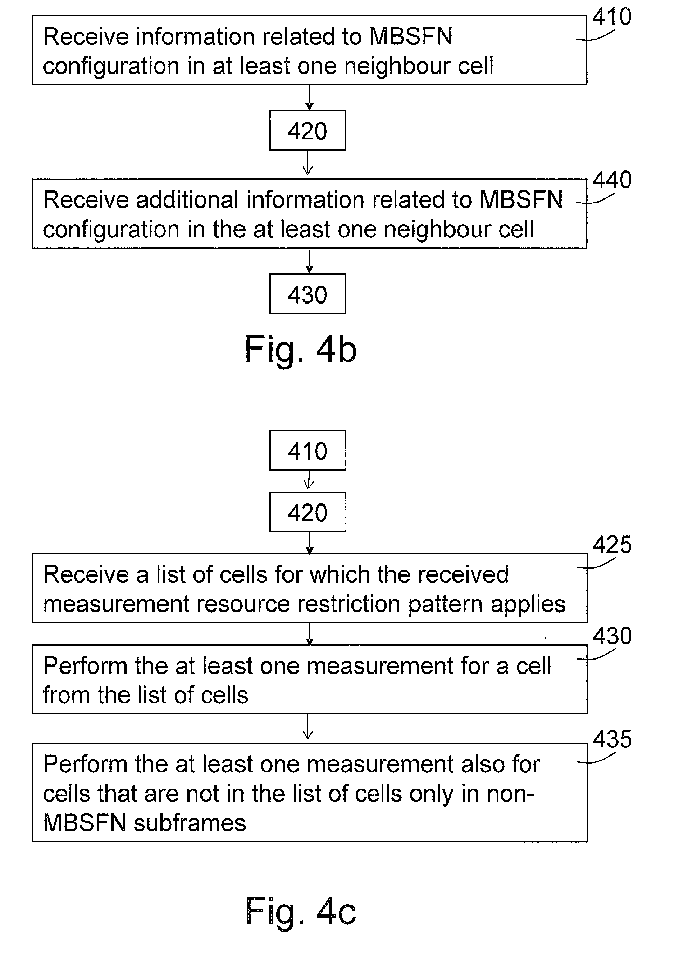

In one embodiment, illustrated in the flowchart of **Figure 4b**, the method further comprises in addition to steps 420, and 430 described above with reference to **Figure 4a****:**
- 410: Receiving, from the first network node, information related to MBSFN configuration in the at least one neighbour cell. The information related to MBSFN configuration indicates that not all of the at least one neighbour cell have the same MBSFN configuration as a serving cell or a primary cell of the wireless device. This may also be understood as some or none of the at least one neighbour cells have the same MBSFN configuration as the serving cell of the wireless device. The information related to the MBSFN configuration does thus not uniquely or unambiguously define the MBSFN configuration in the at least one neighbour cell. When the received information related to MBSFN configuration does not uniquely or unambiguously define an MBSFN configuration in the at least one neighbour cell, the wireless device or UE shall override or prioritize the restricted subframes over the MBSFN configuration in a cell when the UE is explicitly requested by the network to perform measurements on that cell using the restricted subframes. This implicitly means that the restricted measurement pattern contains "hidden" information about MBSFN configuration for cells for which this pattern is configured. In particular, the UE may assume that all CRS symbols are available for measurements on neighbor cells whose subframes are indicated as restricted measurements, i.e., that the subframes are non-MBSFN subframes. In one embodiment, the information related to MBSFN configuration in the at least one neighbour cell is received in a neighCellConfig information element, as described above under section *"Rules for MBSFN configuration in neighbour cells*". Alternatively, the information related to MBSFN configuration in the at least one neighbour cell may also be received together with the measurement resource restriction pattern, i.e. in the same message.
- 440: Receiving, from the first network node, additional information related to MBSFN configuration in the at least one neighbour cell. This step may be performed before step 430. The received additional information may comprise at least one of: an indication of whether configured MBSFN subframes in at least one of said at least one neighbour cell coincide with the subframes indicated in the pattern; information indicating the bandwidth of MBSFN in at least one of said at least one neighbour cell; information indicating the carrier frequency and/or frequency band in which the MBSFN is used in at least one of said at least one neighbour cell. However, it may comprise any of the information described above in section *"Enhanced signalling for MBSFN configuration".* Such information may thus increase the awareness of the wireless device regarding the MBSFN configuration in neighbour cells, and may be used by the wireless device to improve the measurements and the measurement performance.

This embodiment may be combined with any of the embodiments described herein.

In a first embodiment, illustrated in the flowchart of **Figure 4c**, the method comprises in addition to steps 410 and 420 of receiving MBSFN configuration information and the measurement resource restriction pattern described above:
- 425: Receiving a list of cells for which the received measurement resource restriction pattern applies. In step 430, the at least one measurement is performed for a cell from the list of cells. The measurement resource restriction pattern is thus applicable only for the cells in the received list. The list of cells may be received in a measSubframeCellList information element. As already described above, the information related to the MBSFN configuration in the neighbour cells may be received in the neighCellConfig information element. The neighCellConfig information element may comprise the MBSFN configuration information only for cells from the list of cells.
- 435: Optionally performing the at least one measurement also for cells that are not in the list of cells, but only in non-MBSFN subframes. Non-MBSFN subframes comprise subframes that are not MBSFN configurable, and/or MBSFN configurable subframes that are not configured with MBSFN. As described above, in FDD only subframes 1, 2, 3, 6, 7, and 8 may be configured as MBSFN, i.e., are MBSFN-configurable, which means that subframes 4 and 5 are examples of non-MBSFN subframes..

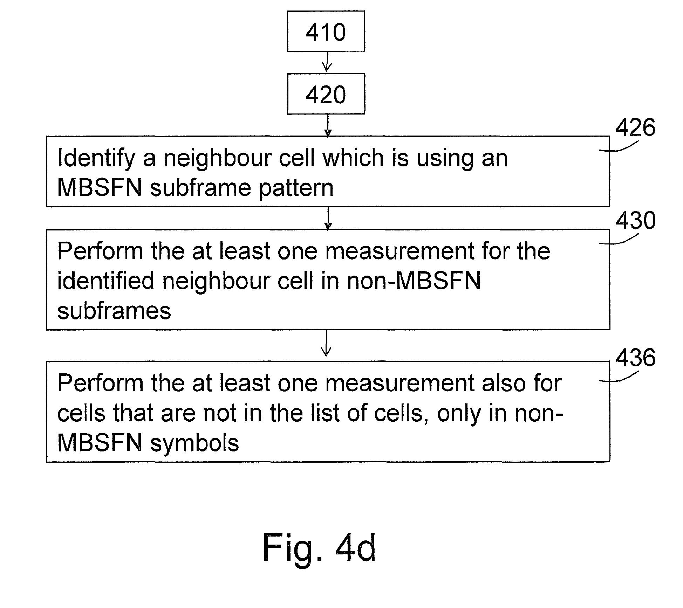

A second embodiment, that may be an alternative to the first embodiment described above, is illustrated in the flowchart of **Figure 4d****.** The method comprises in addition to steps 410 and 420 of receiving MBSFN configuration information and the measurement resource restriction pattern described above:
- 426: Identifying a neighbour cell which is using an MBSFN subframe pattern. Identifying the neighbour cell may comprise either receiving an indicator identifying the neighbour cell from the first network node, or identifying the neighbour cell based on a signal measurement performed during cell search. This step is followed by step 430 of performing the at least one measurement on the identified neighbour cell in non-MBSFN subframes.Non-MBSFN subframes comprise subframes that are not MBSFN configurable and/or MBSFN configurable subframes that are not configured with MBSFN.
- 436: As an optional step, the method further comprises performing the at least one measurement also in non-MBSFN symbols of MBSFN subframes, wherein non-MBSFN symbols comprise CRS. In this case the measurement may be performed based on CRS measurements as a complement to measurements in non-MBSFN subframes.

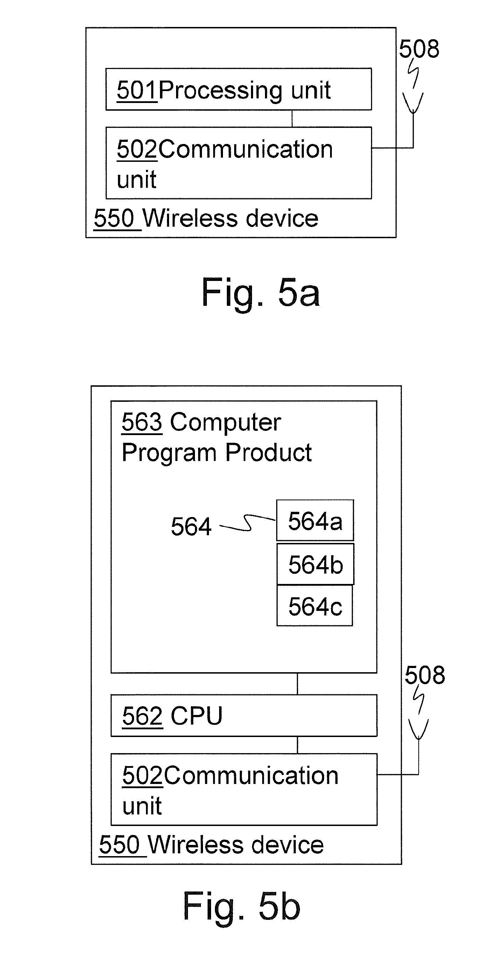

The wireless device 550 is schematically illustrated in **Figure 5a**, according to embodiments. The wireless device is adapted to perform measurements when MBSFN subframes are configured in the system, and comprises a processing unit 501 adapted to receive, from a first network node, a measurement resource restriction pattern indicating subframes for performing at least one measurement. In one embodiment, the measurement resource restriction pattern is determined by the first network node. In an alternative embodiment, the measurement resource restriction pattern is determined by a positioning node, such as an Evolved Serving Mobile Location Center (E-SMLC) in the LTE system, which forwards the pattern to the first network node. The processing unit 501 is further adapted to perform the at least one measurement for at least one cell of a first cell of the first network node and at least one neighbour cell according to the pattern, assuming that subframes indicated for performing the at least one measurement are non-MBSFN subframes. The processing unit 501 may also be adapted to receive, from the first network node, information related to MBSFN configuration in the at least one neighbour cell. The first cell may be the serving cell or the primary cell of the wireless device. The information related to MBSFN configuration indicates that not all of the at least one neighbour cell have the same MBSFN configuration as a serving cell or a primary cell of the wireless device. The received information does thus not uniquely or unambiguously define an MBSFN configuration in the at least one neighbour cell. The wireless device 550 may also comprise a communication unit 502 adapted to communicate with different network nodes, such as for receiving information from the first network node via one or more antennas 508.

In one embodiment, the at least one measurement is at least one of: a signal strength measurement, a signal quality measurement, a channel state measurement, a channel quality measurement, a timing measurement, and a direction measurement. The measurement resource restriction pattern may be at least one of a time domain pattern, a positioning subframe pattern, and a pattern for backhaul communication.

In one embodiment the processing unit 501 is adapted to receive the information related to MBSFN configuration in the at least one neighbour cell in a neighCellConfig information element. In an alternative embodiment, the processing unit 501 is adapted to receive the information related to MBSFN configuration in the at least one neighbour cell together with the measurement resource restriction pattern.

In another embodiment, which may be combined with any of the embodiments described herein, the processing unit 501 is further adapted to receive, from the first network node, additional information related to MBSFN configuration in the at least one neighbour cell. The additional information may comprise at least one of: an indication of whether configured MBSFN subframes in at least one of said at least one neighbour cell coincide with the subframes indicated in the pattern; information indicating the bandwidth of MBSFN in at least one of said at least one neighbour cell; information indicating the carrier frequency and/or frequency band in which the MBSFN is used in at least one of said at least one neighbour cell.

In the first embodiment, described above with reference to **Figure 4c**, the processing unit 501 is further adapted to receive a list of cells for which the received measurement resource restriction pattern applies, and to perform the at least one measurement on a cell from the list of cells. The list of cells may be received in a measSubframeCellList information element. The neighCellConfig information element may in one embodiment comprise the MBSFN configuration information only for cells from the list of cells. The processing unit 501 may optionally be further adapted to perform the at least one measurement also for cells that are not in the list of cells only in non-MBSFN subframes, wherein non-MBSFN subframes comprise subframes that are not MBSFN configurable and/or MBSFN configurable subframes that are not configured with MBSFN.

In the second embodiment, described above with reference to **Figure 4d**, the processing unit 501 is further adapted to identify a neighbour cell which is using an MBSFN subframe pattern, and to perform the at least one measurement on the identified neighbour cell in non-MBSFN subframes, wherein non-MBSFN subframes comprise subframes that are not MBSFN configurable and/or MBSFN configurable subframes that are not configured with MBSFN. The processing unit 501 may be further adapted to identify the neighbour cell by receiving an indicator identifying the neighbour cell from the first network node, or by identifying the neighbour cell based on a signal measurement performed during cell search. Optionally, the processing unit 501 may be further adapted to perform the at least one measurement also in non-MBSFN symbols of MBSFN subframes, wherein non-MBSFN symbols comprise cell-specific reference signals.

**Figure 5b** schematically illustrates an embodiment of the wireless device 550, which is an alternative way of disclosing the embodiment illustrated in **Figure 5a****.** In **Figure 5b**, the wireless device 550 comprises the communication unit 502 and the antenna 508 already described above, and a CPU 562 which may be a single unit or a plurality of units. Furthermore, the wireless device 550 comprises at least one computer program product 563 in the form of a non-volatile memory, e.g. an EEPROM (Electrically Erasable Programmable Read-Only Memory), a flash memory or a disk drive. The computer program product 563 comprises a computer program 564, which comprises code means which when run on the wireless device 550 causes the CPU 562 on the wireless device 550 to perform the steps of the procedures described earlier in conjunction with **Figure 4a****.** Hence in the embodiments described, the code means in the computer program 564 of the wireless device 550 comprises a first receiving module 564a for receiving information related to MBSFN configuration in a neighbour cell via the communication unit 502 and the antenna 508, a second receiving module 564b for receiving a measurement resource restriction pattern via the communication unit 502 and the antenna 508, and a performing module 564c for performing the measurement for a cell according to the pattern. The code means may thus be implemented as computer program code structured in computer program modules. The modules 564a-c essentially perform the steps 410, 420 and 430 of the flow in **Figure 4a** to emulate the wireless device described in **Figure 5a**.

Although the code means in the embodiment disclosed above in conjunction with **Figure 5b** is implemented as computer program modules which when run on the CPU causes the wireless device to perform the steps described above in conjunction with **Figure 4a**, one or more of the code means may in alternative embodiments be implemented at least partly as hardware circuits.

As already mentioned, the problem of enabling efficient wireless device measurements when MBSFN subframes are configured in the network, may be solved either through a solution based in the wireless device, in line with the above description referring to **Figures 4a****-d** and **5a-b**, or through a network based solution. The network based solution is described hereinafter.

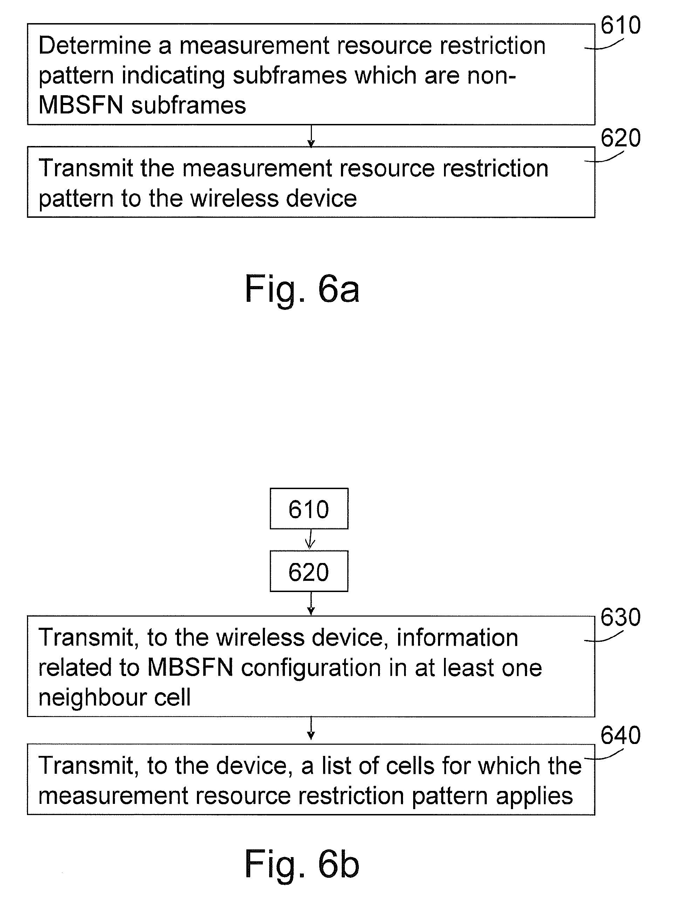

**Figure 6a** is a flowchart of a method in a network node of a communications system, for enabling measurements performed by a wireless device, when MBSFN subframes are configured in the system. The network node may be a radio network node or a positioning node communicating with a wireless device via the radio network node. The method comprises:
- 610: Determining a measurement resource restriction pattern indicating subframes for performing at least one measurement for at least one cell. The indicated subframes are non-MBSFN subframes, which may comprise subframes that are not MBSFN configurable and/or MBSFN configurable subframes that are not configured with MBSFN. In this way it is ensured that a wireless device that receives the restriction pattern will never try to measure a CRS in other time slots than in time slot 0 of an MBSFN subframe, as the restriction pattern only indicates non-MBSFN subframes. The at least one measurement may be any of the above mentioned measurements performed by a wireless device. In embodiments the measurement(s) may be at least one of a signal strength measurement, a signal quality measurement, a channel state measurement, a channel quality measurement, a timing measurement, and a direction measurement. The measurement resource restriction pattern may be at least one of a time domain pattern, a positioning subframe pattern, and a pattern for backhaul communication.
- 620: The method further comprises transmitting the measurement resource restriction pattern to the wireless device, for enabling wireless device measurements for the at least one cell according to the pattern.

In another embodiment, illustrated in **Figure 6b**, the method further comprises, in addition to steps 610 and 620 described above:
- 630: Transmitting, to the wireless device, information related to MBSFN configuration in at least one neighbour cell. The at least one neighbour cell is neighbour to a serving cell of the wireless device. This step corresponds to step 440 of the method in the wireless device described above. The information related to MBSFN configuration may be transmitted together with the measurement resource restriction pattern. The information related to MBSFN configuration in the at least one neighbour cell comprises at least one of an indication of whether configured MBSFN subframes in the at least one neighbour cell coincide with the subframes indicated in the pattern; information indicating the bandwidth of MBSFN in the at least one neighbour cell; information indicating the carrier frequency and/or frequency band in which the MBSFN is used in the at least one neighbour cell.
- 640: Transmitting, to the wireless device, a list of cells for which the measurement resource restriction pattern applies. This step corresponds to step 425 of the method in the wireless device described above.

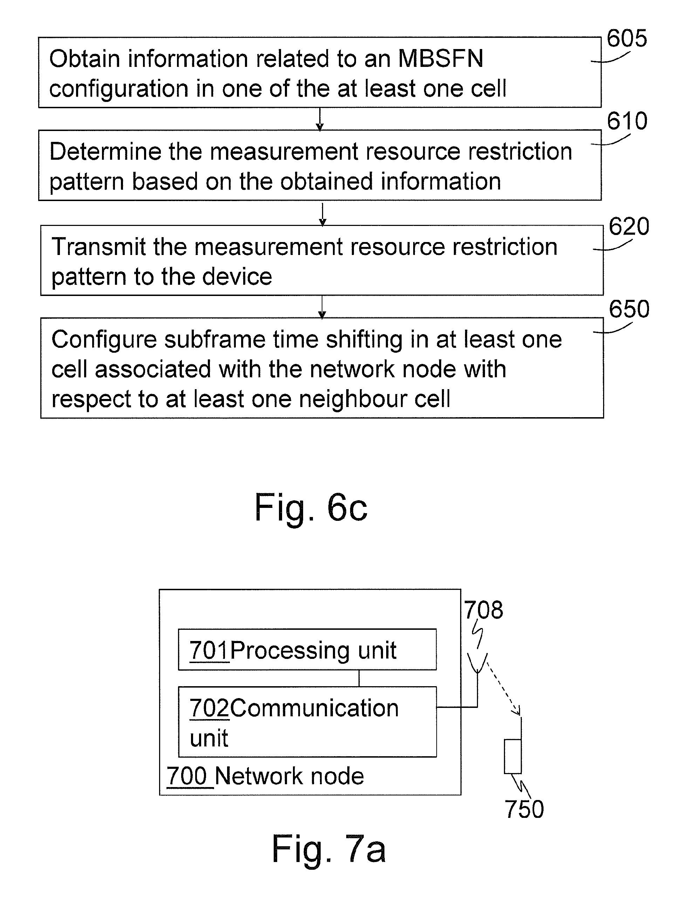

In still another embodiment, illustrated in **Figure 6c**, the method comprises the following steps:
- 605: Obtaining information related to an MBSFN configuration of one of the at least one cell. The network node may e.g. receive MBSFN configuration information from another node for one of the cells, and thus increases its awareness about this cell's MBSFN configuration.
- 610: Determining the measurement resource restriction pattern based on the obtained information. As the network node has increased its awareness about the MBSFN configuration of one of the cells, the measurement resource restriction pattern may be adapted to take this increased awareness into account. A measurement resource restriction pattern may thus be differently determined for this cell than for other cells.
- 620: Transmitting the measurement resource restriction pattern to the wireless device.
- 650: Configuring subframe time shifting in at least one cell associated with the network node with respect to the at least one neighbour cell, such that an indicated subframe corresponds in time to a subframe configured to be used for MBSFN in the at least one neighbour cell. This embodiment is, as explained above, best suitable for an FDD system.

A network node 700 of a communications system is schematically illustrated in **Figure 7a**, according to embodiments. The network node may be a radio network node or a positioning node. The network node 700 may comprise a communication unit 702 adapted to communicate with different network nodes, e.g for transmitting information to a wireless device 750 via one or more antennas 708. The network node is configured to enable measurements performed by the wireless device 750, when MBSFN subframes are configured in the system. The network node comprises a processing unit 701 configured to determine a measurement resource restriction pattern indicating subframes for performing at least one measurement for at least one cell, where the indicated subframes are non-MBSFN subframes. The measurement(s) may be at least one of: a signal strength measurement, a signal quality measurement, a channel state measurement, a channel quality measurement, a timing measurement, and a direction measurement. Non-MBSFN subframes may comprise subframes that are not MBSFN configurable, and/or MBSFN configurable subframes that are not configured with MBSFN. The communication unit 702 is configured to transmit the measurement resource restriction pattern to the wireless device 750 via the antenna 708, for enabling measurements for the at least one cell according to the pattern. The network node may e.g. be a BS, in which case the communication unit 702 is a transmitter in the BS connected to the antenna(s) 708 for transmitting the pattern to the wireless device 750. The measurement resource restriction pattern may be at least one of a time domain pattern, a positioning subframe pattern, and a pattern for backhaul communication.

In one embodiment, the communication unit 702 is further configured to transmit, to the wireless device, information related to MBSFN configuration in at least one neighbour cell. The at least one neighbour cell is neighbour to a serving cell of the wireless device. The communication unit 702 may optionally be configured to transmit the information related to MBSFN configuration in the at least one neighbour cell together with the measurement resource restriction pattern, i.e., in a same message. The information related to MBSFN configuration in the at least one neighbour cell comprises at least one of: an indication of whether configured MBSFN subframes in the at least one neighbour cell coincide with the subframes indicated in the pattern; information indicating the bandwidth of MBSFN in the at least one neighbour cell; information indicating the carrier frequency and/or frequency band in which the MBSFN is used in the at least one neighbour cell. The communication unit 702 may additionally also be configured to transmit, to the wireless device, a list of cells for which the measurement resource restriction pattern applies.

In still another embodiment, the processing unit 701 is further configured to obtain information related to an MBSFN configuration of one of the at least one cell, and to determine the pattern based on the obtained information. The processing unit 701 may also be adapted to configure subframe time shifting in at least one cell associated with the network node with respect to the at least one neighbour cell, such that an indicated subframe corresponds in time to a subframe configured to be used for MBSFN in the at least one neighbour cell.

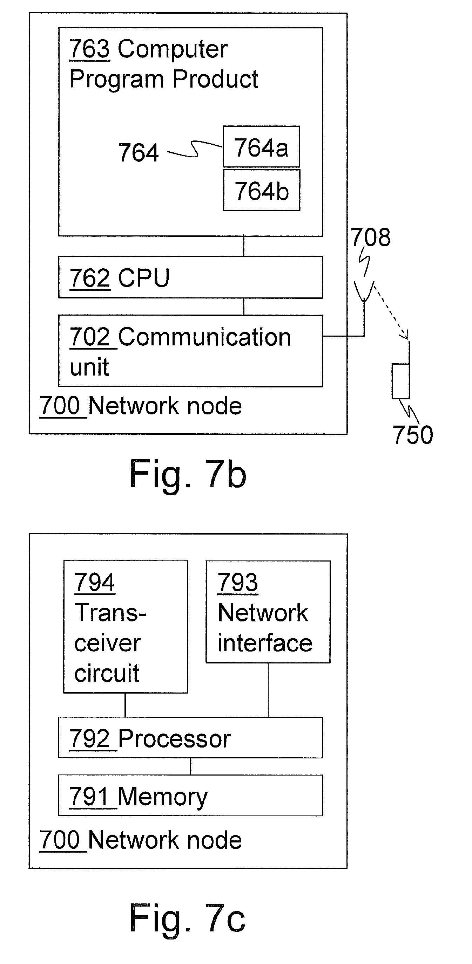

**Figure 7b** schematically illustrates an embodiment of the network node 700, which is an alternative way of disclosing the embodiment illustrated in **Figure 7a****.** In **Figure 7b**, the network node 700 comprises the communicating unit 702 and the antenna 708 already described above, and a CPU 762 which may be a single unit or a plurality of units. Furthermore, the network node 700 comprises at least one computer program product 763 in the form of a non-volatile memory, e.g. an EEPROM (Electrically Erasable Programmable Read-Only Memory), a flash memory or a disk drive. The computer program product 763 comprises a computer program 764, which comprises code means which when run on the network node 700 causes the CPU 762 on the network node 700 to perform the steps of the procedure described earlier in conjunction with **Figure 6a**. Hence in the embodiments described, the code means in the computer program 764 of the network node 700 comprises a determining module 764a for determining a measurement resource restriction pattern, and a transmitting module 764b for transmitting the measurement resource restriction pattern to the wireless device 750, via the communication unit 702 and the antenna 708. The code means may thus be implemented as computer program code structured in computer program modules. The modules 764a-b essentially perform the steps 610, and 620 of the flow in **Figure 6a** to emulate the network node described in **Figure 7a**. Although the code means in the embodiment disclosed above in conjunction with **Figure 7b** is implemented as computer program modules which when run on the CPU 762 causes the network node 700 to perform the steps described above in conjunction with **Figure 6a**, one or more of the code means may in alternative embodiments be implemented at least partly as hardware circuits.

**Figure 7c** schematically illustrates the main functional components of a network node 700, according to an exemplary embodiment. The network node comprises a memory 791 for storing programs and data needed for operation, a processor 792 for executing programs stored in memory to control operation of the network node, a transceiver circuit 794 for transmitting and receiving data over a wireless channel, and optionally, a network interface 793 for connecting to a signaling network. The memory 791 may comprise both volatile and non-volatile memory devices. The memory stores programs and instructions to implement the various procedures described herein. The processor 792 may comprise one or more microprocessors, digital signal processor, hardware, firmware, or a combination thereof. In some embodiments, the processor 792 may be implemented by an Application-specific integrated circuit (ASIC). The transceiver circuit 794 is a wireless transceiver and may operate according to LTE, WCDMA, or other standards now known or later developed. The network interface 793 connects to a signaling network to enable communication with other network nodes.

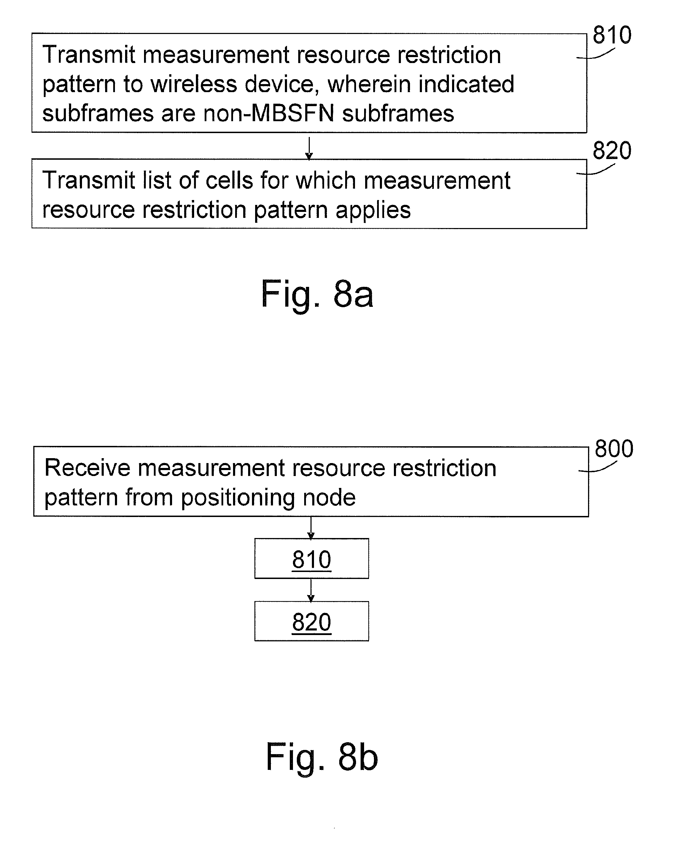

**Figure 8a** is a flowchart of a method in an RBS of a communications system, for enabling measurements performed by a wireless device served by the radio base station, when MBSFN subframes are configured in the system. The method comprises:
- 810: Transmitting, to the wireless device, a measurement resource restriction pattern indicating subframes for performing at least one measurement, wherein the indicated subframes are non-MBSFN subframes, and
- 820: Transmitting a list of cells for which the measurement resource restriction pattern applies.

In another embodiment, illustrated in **Figure 8b**, the method further comprises, before steps 810 and 820 described above:
- 800: Receiving the measurement resource restriction pattern from at least one of a coordinating node, a self-organizing network node, an operation and maintenance node, a mobility management entity node, and a positioning node. In this embodiment, the measurement resource restriction pattern is determined by another node and forwarded to the RBS, for further transmission to the UE.

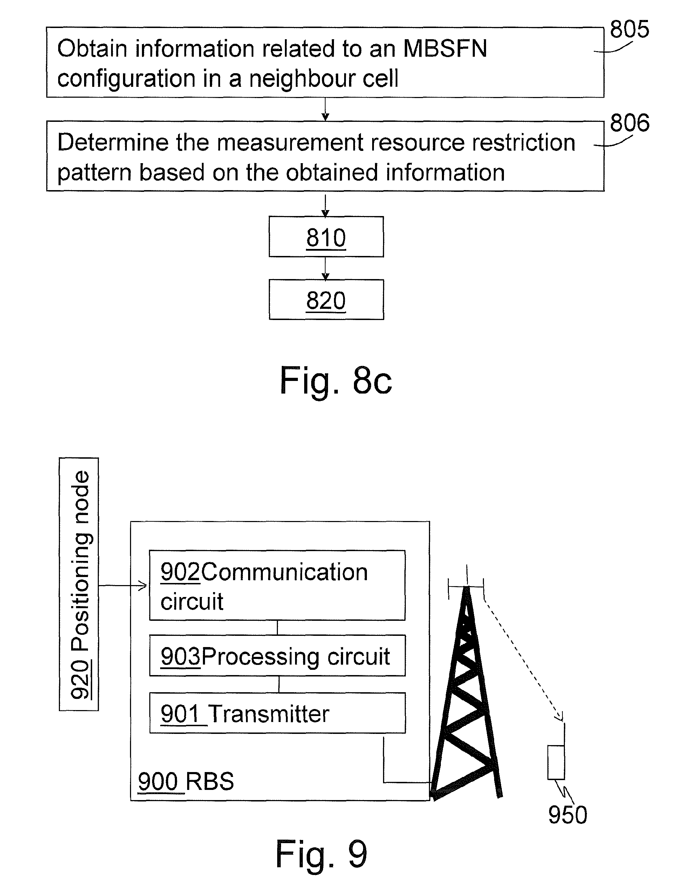

In an alternative embodiment, illustrated in **Figure 8c**, the method comprises, before steps 810 and 820 described above:
- 805: Obtaining information related to an MBSFN configuration in a neighbour cell. The obtained information may comprise: an indication of whether configured MBSFN subframes in the neighbour cell coincide with the subframes indicated in the pattern; information indicating the bandwidth of MBSFN in the neighbour cell; and/or information indicating the carrier frequency and/or frequency band in which the MBSFN is used in the neighbour cell.
- 806: Determining the measurement resource restriction pattern based on the obtained information. In this embodiment, the transmitted list of cells comprises the neighbour cell. Here, it is thus the RBS that determines the measurement resource restriction pattern.

In the embodiments described with reference to **Figures 8a****-c**, the at least one measurement may be at least one of: a signal strength measurement, a signal quality measurement, a channel state measurement, a channel quality measurement, a timing measurement, and a direction measurement. Furthermore, the measurement resource restriction pattern may be at least one of a time domain pattern, a positioning subframe pattern, and a pattern for backhaul communication.

An RBS 900 of a communications system is schematically illustrated in **Figure 9**, according to embodiments. The RBS is configured to enable measurements performed by a wireless device 950 served by the RBS, when MBSFN subframes are configured in the system. The RBS comprises a transmitter 901, configured to transmit, to the wireless device 950, a measurement resource restriction pattern indicating subframes for performing at least one measurement. The indicated subframes are non-MBSFN subframes. The transmitter 901 is further configured to transmit a list of cells for which the measurement resource restriction pattern applies.

In one embodiment, the RBS 900 further comprises a communication circuit 902 configured to receive the measurement resource restriction pattern from at least one of a coordinating node, a self-organizing network node, an operation and maintenance node, a mobility management entity node, and a positioning node 920. In an alternative embodiment, the RBS further comprises a processing circuit 903 configured to obtain information related to an MBSFN configuration in a neighbour cell, and to determine the measurement resource restriction pattern based on the obtained information. The transmitted list of cells comprises the neighbour cell in this embodiment. The obtained information related to MBSFN configuration in the neighbour cell may comprise: an indication of whether configured MBSFN subframes in the neighbour cell coincide with the subframes indicated in the pattern; information indicating the bandwidth of MBSFN in the neighbour cell; and/or information indicating the carrier frequency and/or frequency band in which the MBSFN is used in the neighbour cell.

In any of the above embodiment described with reference to **Figure 9**, the at least one measurement may be one or more of: a signal strength measurement, a signal quality measurement, a channel state measurement, a channel quality measurement, a timing measurement, and a direction measurement. Furthermore, the measurement resource restriction pattern may be one or more of a time domain pattern, a positioning subframe pattern, and a pattern for backhaul communication.

### Requirement testing

Different types of UE performance requirements are specified in the standard. In order to ensure that UE meets these requirements, appropriate and relevant test cases are also specified. During the tests all the downlink radio resources are not typically needed for the user under test. In practical circumstances several users receive transmission simultaneously on different resources in a cell. To make the tests as realistic as possible these remaining channels or radio resources should be transmitted in a manner that mimics transmission to other users in a cell.

The objective of UE performance verification, or the so-called UE performance tests, is to verify that UE fulfils the desired performance requirements in a given scenario, conditions and channel environment. By desired performance requirements it is meant those specified in the standard or requested by an operator or by any prospective customer. The performance requirements span a very vast area of UE requirements, such as, for example:
- UE RF receiver requirements e.g. receiver sensitivity,
- UE RF transmitter requirements e.g. UE transmit power accuracy,
- UE demodulation requirements e.g. achievable throughput,
- Radio node RF receiver requirements, e.g. for relays,
- Radio node RF transmitter requirements, e.g. for relays,
- Radio resource management requirements e.g. handover delay.

For example, the UE verification, can be classified into two categories:
1. Verification in lab,
2. Verification in real network.

### 1. Verification in Lab

In the verification in lab, the BS is emulated by test equipment, which is often termed as system simulator. Thus all downlink transmission is done by the test equipment to the test UE. During a test all common and other necessary UE specific control channels are transmitted by the test equipment. In addition a data channel, e.g. Physical downlink shared channel (PDSCH) in E-UTRAN, is also needed to send necessary data and configure the UE. Furthermore typically a single UE is tested at a time. In most typical test cases the entire available downlink resources are not used by the UE. However to make test realistic the remaining downlink resources should also be transmitted to one or multiple virtual users.

In an OFDMA system, the transmission resources comprises time-frequency resources called resource blocks, which are sent with some transmit power level, see section relating to E-UTRAN Downlink Transmission. This type of resource allocation to generate load in OFDMA will be referred to as OFDM channel noise generator (OCNG) in the following. Thus OCNG is sent to a plurality of virtual users for loading the cell.

### 2. Verification in Real Network

These types of tests are demanded by the operators and are performed in a real network. The test may comprise of single or multiple UEs. Prior to the network roll out or in an early phase of deployment the traffic load is typically very low. In classical tests the cell load is generated by increasing transmission power on one or more common channels. However operators are now increasingly demanding the network vendors to generate cell load in realistic fashion for performing tests. This means resources, which are not allocated to the test users should be allocated to the virtual users emulating load in the cell. Thus either all or large part of available resources i.e. channels, transmit power etc is used in the tests. This requires base station to implement the ability to transmit remaining resources in order to generate load. Thus for OFDMA, i.e. in E-UTRAN, OCNG is also deemed to be implemented in an actual base station.

### Noise Generation in WCDMA for UE Performance Verification

In WCDMA, an orthogonal channel noise simulator (OCNS) is used to load cells in the test. The OCNS is implemented in both test equipment and also possibly in the base station. In the former case it is standardized in 3GPP TS 25.101 and TS 25.133 for each type of test or same for similar tests. The OCNS comprises channelization code and relative power. In a CDMA system the position of channelization code in a code tree is sensitive to intra-cell interference. Therefore more careful selection of codes for OCNS and their power levels is needed. An example of OCNS from 3GPP TS 25.101 for UE demodulation tests is quoted below:

### Example: DPCH Channelization Code and relative level settings for OCNS signal

| **Channelization Code at SF=128** | **Relative Level setting (dB) (Note 1)** | **DPCH Data (see NOTE 3)** |
|---|---|---|
| 2 | -1 | The DPCH data for each channelization code shall be uncorrelated with each other and with any wanted signal over the period of any measurement. For OCNS with transmit diversity the DPCH data sent to each antenna shall be either STTD encoded or generated from uncorrelated sources. |
| 11 | -3 | |
| 17 | -3 | |
| 23 | -5 | |
| 31 | -2 | |
| 38 | -4 | |
| 47 | -8 | |
| 55 | -7 | |
| 62 | -4 | |
| 69 | -6 | |
| 78 | -b | |
| 85 | -9 | |
| 94 | -10 | |
| 125 | -8 | |
| 113 | -6 | |
| 119 | 0 | |
| NOTE 1: The relative level setting specified in dB refers only to the relationship between the OCNS channels. The level of the OCNS channels relative to the lor of th e complete signal is a function of the power of the other channels in the signal with th e intention that the power of the group of OCNS channels is used to make the total signal add up to 1. | | |
| NOTE 2: The DPCH Channelization Codes and relative level settings are chosen to simulate a signal with realistic Peak to Average Ratio. | | |
| NOTE 3: For MBSFN, the group of OCNS channels represent orthogonal S- CCPCH channels instead of DPCH. Transmit diversity is not applicable to MBSFN which excludes STTD. | | |

### Measurement requirements in networks using blank MBSFN for interference mitigation

Procedures addressing measurement requirements applicable in networks using blank MBSFN subframes are provided hereinafter. The methods may also be implemented in testing environment, e.g., nodes that are testing equipment, simulation, or emulation environment, where the presence of MBSFN subframes in a cell may be modeled by e.g. an OCNG pattern with blank MBSFN subframes. The blank MBSFN subframes should preferably not contain MBSFN/MBMS data and/or Physical Multicast Channel (PMCH) defined. In at least one embodiment, MBSFN subframes are configured to not overlap or to have a limited overlap with measurement patterns.

### Testing with MBSFN subframes

In prior art the OCNG patterns are used for modeling allocations to virtual UEs which are not under test in LTE. The OCNG patterns generate noise to model interference for the UEs which are under test. The generated noise is OFDMA based signal. In prior art it is also known that OCNG pattern are used to generate noise in contiguous units of resources in frequency domain and the remaining contiguous unit may be used for allocation to the UE, such as PDSCH transmission for configuration, or reference measurement channel. They are implemented in test equipment such as a system simulator or an emulator, and also in a real network nodes such as eNodeBs which are used for the testing of the UE, or relay, or similar devices.

The tests where OCNG can be used may be done to verify one or more UE requirements such as UE performance requirements, UE RRM requirements, UE measurement requirements, and UE accuracy requirements. The tests, where OCNG can be used, may also be done to verify one or more relay node requirements such as relay performance requirements, relay RRM requirements, relay measurement requirements, and relay accuracy requirements.

The UE requirements are defined in 3GPP TS 36.133 and TS 36.101. According to embodiments, the OCNG patterns are also used for modeling one or more blank MBSFN subframes. In prior art the implementation of the blank MBSFN subframes in OCNG is not known. The blank MBSFN subframes means there is no data or PMCH transmissions. This requires special implementation of the OCNG patterns in the test equipment. Hence new patterns have to be defined. Interchangeably, blank MBSFN subframes are also called low interference subframes or low interference MBSFN subframes. They are used to mimic low interference in a neighbouring cell and in particular in potentially aggressive cell. In this way a heterogeneous environment can be implemented. This enables verification of certain UE requirements e.g. cell identification, RSRP/RSRQ accuracy, radio link monitoring, CSI reporting, and demodulation requirements. The proposed OCNG patterns with blank MBSFN subframes can be implemented in test equipment and also in a real network node such as an eNode B, a radio BS, and a relay node, which are used for the testing and verification of the one or more UE requirements or relay requirements or requirements for the similar devices. Two non-limiting examples of OCNG patterns with blank MBSFN subframes are shown in table 1 and table 2 for 10 MHz. Similar patterns can be defined for other bandwidths and different number of RBs allocation for OCNG data, blank PMCH and reference measurement channels.

**Table 1: OCNG FDD pattern with blank MBSFN subframes for using outer resource blocks allocation in 10 MHz**

| ***Allocation** n_{PRB}* | ***Relative power level* γ*_{PRB} [dB]*** | | | | ***PDSCH Data*** | ***PMCH Data*** |
|---|---|---|---|---|---|---|
| | ***Subframe*** | | | | | |
| | *0* | *5* | *4,9* | *1*-*3, 6-8* | | |
| *0 - 12* | *0* | *0* | *0* | *N*/*A* | *Note 1* | *N*/*A* |
| *37 - 49* | *0* | *0* | *0* | *N*/*A* | | |
| *0-49* | *N*/*A* | *N*/*A* | *N*/*A* | *Note 4* | *N*/*A* | *Note 2* |
| *Note 1: These physical resource blocks are assigned to an arbitrary number of virtual UEs with one PDSCH per virtual UE; the data transmitted over the OCNG PDSCHs shall be uncorrelated pseudo random data, which is QPSK modulated. The parameter* γ*_{PRB} is used to scale the power of PDSCH*. | | | | | | |
| *Note 2: Each physical resource block (PRB) is assigned to MBSFN transmission. There is no PMCH data transmitted during the MBSFN subframes. PMCH symbols shall not contain cell-specific Reference Signals. PMCH subframes shall contain cell-specific Reference Signals only in the first symbol of the first time slot.* | | | | | | |
| *Note 3: If two or more transmit antennas with CRS are used in the test, the PDSCH part of OCNG shall be transmitted to the virtual users by all the transmit antennas with CRS and according to the antenna transmission mode 2. The parameter*γ*_{PRB} applies to each antenna port separately, so the transmit power of the PDSCH part of OCNG is equal between all the transmit antennas with CRS used in the test. The antenna transmission modes are specified in section 7.1 in 3GPP TS 36.213.* | | | | | | |
| *Note 4: 0dB for 1 transmit antenna with CRS,* +*3dB for 2 transmit antennas with CRS* | | | | | | |
| *N*/*A: Not Applicable* | | | | | | |

**Table 2: OCNG FDD pattern with blank MBSFN subframes for using full resource blocks allocation in 10 MHz**

| ***Allocation** n_{PRB}* | ***Relative power level* γ*_{PRB} [dB]*** | | | | ***PDSCH Data*** | ***PMCH Data*** |
|---|---|---|---|---|---|---|
| | ***Subframe*** | | | | | |
| | *0* | *5* | *4, 9* | *1*-*3, 6-8* | | |
| *0* - *49* | *0* | *0* | *0* | *N*/*A* | *Note 1* | *N*/*A* |
| *0* - *49* | *N*/*A* | *N*/*A* | *N*/*A* | *Note 4* | *N*/*A* | *Note 2* |
| *Note 1: These physical resource blocks are assigned to an arbitrary number of virtual UEs with one PDSCH per virtual UE; the data transmitted over the OCNG PDSCHs shall be uncorrelated pseudo random data, which is QPSK modulated. The parameter* γ*_{PRB} is used to scale the power of PDSCH*. | | | | | | |
| *Note 2: Each physical resource block (PRB) is assigned to MBSFN transmission*. *There is no PMCH data transmitted during the MBSFN subframes. PMCH symbols shall not contain cell-specific Reference Signals*. *PMCH subframes shall contain cell-specific Reference Signals only in the first symbol of the first time slot.* | | | | | | |
| *Note 3: If two or more transmit antennas with CRS are used in the test, the PDSCH part of OCNG shall be transmitted to the virtual users by all the transmit antennas with CRS and according to the antenna transmission mode 2. The parameterγ_{PRB} applies to each antenna port separately, so the transmit power of the PDSCH part of OCNG is equal between all the transmit antennas with CRS used in the test. The antenna transmission modes are specified in section 7.1 in 3GPP TS 36.213.* | | | | | | |
| *Note 4: 0dB for 1 transmit antenna with CRS,* +*3dB for 2 transmit antennas with CRS* | | | | | | |
| *N*/*A: Not Applicable* | | | | | | |

Some examples of the requirements are measurement period requirements and measurement reporting requirements. Another example is accuracy requirement.

### Measurement period and measurement reporting period requirements

In some embodiments, the measurement period and/or measurement reporting requirements are extended when MBSFN subframes such as blank MBSFN subframes are configured in at least one cell, e.g. compared to that when the interference is reduced by some other means, such as by configuring ABS subframes or scheduling.

In another embodiment, the measurement period and measurement reporting period requirements are defined depending on the number of MBSFN subframes, e.g. blank MBSFN subframes, in the measured cell. In one specific example, the maximum number of blank MBSFN subframes for the measured cell is defined within the measurement period for the cell. Some examples of the requirements applicability are:
- The requirements (e.g. RLM, RRM, including cell search, CSI or demodulation requirements) apply when no MBSFN subframes are configured in the measured cell;
- The requirements apply when the subframes indicated for measurements on a cell do not coincide with configured MBSFN subframes in this measured cell;
- The requirements apply when at most N (N >=1) MBSFN subframes are configured in the measured cell;
- The requirements apply when a time domain measurement resource restriction pattern is configured by higher layers and at most N (N >=1) MBSFN subframes are configured in the measured cell;
- The requirements apply when a time domain measurement resource restriction pattern is configured by higher layers and at most N (e.g. N >=1) MBSFN subframes are configured in the measured cell out of M (e.g. M>1) subframes indicated for performing the measurement, i.e. indicated by the time domain measurement resource restriction pattern;
- The requirements apply when a time domain measurement resource restriction pattern is configured by higher layers and at least K (e.g. K >=1 per frame) are available for measurements out of M (e.g. M>1) subframes indicated for performing the measurement, i.e. indicated by the time domain measurement resource restriction pattern;
- For eICIC, the current standard specifies only eICIC patterns for one frequency. Inter-frequency eICIC is for further study. The measurement period may be further extended with a larger number of frequencies, e.g., doubled with one inter-frequency in addition to the serving frequency.

An advantage with specifying requirements applicability when MBSFN is configured in the network is that it helps maintaining good measurement performance.

### Relative measurement requirements

Relative accuracy requirements are defined e.g. for RSRP, where the RSRP measurement accuracy in one cell is defined relative to the RSRP measurement accuracy in another cell. Two cells are involved in such a requirement, and the resulting relative accuracy depends on the measurement accuracy in each cell and how the measurement errors correlate with each other in the two cells, e.g., a significant simultaneous drift in both cells may still result in a small relative error. With the latter, the relative error may be small when the two cells are measured simultaneously. However, if blank MBSFN subframes are used in at least one of the cells, the number of simultaneous measurement occasions are reduced. Furthermore, if the measurements on at least one cell have to be performed while blank MBSFN subframes are configured in the other one, which may occur, e.g., with eICIC, when one of the cells is an aggressor cell and another cell is a victim cell, then at least one of the following situations may occur:
1. If cell 2 is an aggressor and uses blank MBSFN subframes aligned with at least some of the measurement occasions in cell 1, the UE performs cell 1 measurements when blank MBSFN subframes are configured in cell 2 and performs cell 2 measurements in other subframes when blank MBSFN subframes are not configured;
2. If cell 2 measurements have to be also (in addition to situation 1) performed when blank MBSFN subframes are configured in cell 1, then cell 1 measurements have to be performed when blank MBSFN subframes are not configured in cell 1;
3. If blank MBSFN subframes are configured with the same periodicity in cell 1 and cell 2 (in addition to the situations 1 and 2), then either the measurement period may be extended (e.g., doubled) or the relative accuracy requirement may be relaxed;
4. If blank MBSFN subframes are configured with a longer periodicity in one of the cells (with either situation 1 or in addition to the situation 2), then the measurement period may equal to that necessary to achieve a certain number of measurement occasions on the cell with the largest periodicity of or intensity of blank MBSFN subframes.

For example, for eICIC, the above may also imply that the following is true for relative measurement requirements such as relative RSRP measurement requirements:
- The requirements with blank MBSFN subframes are different (more relaxed) than those for non-MBSFN based ABS; or
- Generic requirements are determined by those for the case blank MBSFN subframes are used; or
- At least some of the measurement occasions for the two cells are required to be misaligned when blank MBSFN subframes are used in at least one cell or alternatively, or the requirement of aligning measurement occasions for the two cells does not apply when blank MBSFN subframes are configured in at least one cell and coincide with the restricted measurement pattern for that cell.

In embodiments, a method in a node, for testing requirements of a wireless device in a communication system when MBSFN subframes are configured in the system, is provided. The node may be a test equipment node or a radio network node. The method comprises:
- requesting the wireless device to perform at least one measurement when an OFDM channel noise generator, OCNG, pattern comprising a blank MBSFN subframe configuration is used in a cell,
- collecting information related to the at least one measurement performed by the wireless device, and
- verifying the collected information against at least one pre-defined requirement.

The wireless device may be a UE or a relay node. In some embodiments, the wireless device is configured with restricted measurements. In further example embodiments, the wireless device is configured with the restricted measurements by the same node that configured the OCNG pattern comprising at least one MBSFN subframe. In yet other example embodiments, the wireless device is provided with the MBSFN configuration together with the restricted measurement configuration information, i.e., in the same message. In yet other example embodiments, the MBSFN configuration comprises any enhanced MBSFN configuration described in other embodiments of the current disclosure.

In some embodiments, the blank MBSFN subframe configuration overlaps with a measurement pattern of the wireless device. The at least one pre-defined requirement comprises at least one of:
- a cell identification requirement;
- a reference signal received power accuracy requirement;
- a reference signal received quality accuracy requirement;
- a radio link monitoring requirement;
- a performance requirement;
- a CSI reporting requirement; and
- a demodulation requirement.

In some embodiments, the at least one pre-defined requirement depends on a number of blank MBSFN subframes in the blank MBSFN subframe configuration.

According to embodiments, a node configured to test requirements of a wireless device in a communication system when MBSFN subframes are configured in the system, is provided. The node may be a test equipment node or a radio network node. The node comprises a processing unit configured to:
- request the wireless device to perform at least one measurement when an OFDM channel noise generator, OCNG, pattern comprising a blank MBSFN subframe configuration is used in a cell,
- collect information related to the at least one measurement performed by the wireless device, and
- verify the collected information against at least one pre-defined requirement.

The above mentioned and described embodiments are only given as examples and should not be limiting. Other solutions, uses, objectives, and functions within the scope of the accompanying patent claims may be possible.

## Claims

1. A method in a network node (700) of a communications system, for enabling measurements performed by a wireless device (750), when Multimedia Broadcast multicast service Single Frequency Network, MBSFN, subframes are configured in the system, the method comprising:
- determining (610) a measurement resource restriction pattern indicating subframes for performing at least one measurement for at least one cell, wherein the indicated subframes are non-MBSFN subframes,
- transmitting (620) the measurement resource restriction pattern to the wireless device, for enabling measurements for the at least one cell according to the pattern.

2. The method according to claim 1, wherein the non-MBSFN subframes comprise subframes that are not MBSFN configurable and/or MBSFN configurable subframes that are not configured with MBSFN.

3. The method according to any of the preceding claims, wherein the network node is a radio network node or a positioning node.

4. The method according to any of the preceding claims, wherein the at least one measurement is at least one of: a signal strength measurement, a signal quality measurement, a channel state measurement, a channel quality measurement, a timing measurement, and a direction measurement.

5. The method according to any of the preceding claims, wherein the measurement resource restriction pattern is at least one of a time domain pattern, a positioning subframe pattern, and a pattern for backhaul communication.

6. The method according to any of claims 1-5, further comprising transmitting (630), to the wireless device, information related to MBSFN configuration in at least one neighbour cell, the at least one neighbour cell being neighbour to a serving cell of the wireless device.

7. The method according to claim 6, wherein the information related to MBSFN configuration in the at least one neighbour cell is transmitted together with the measurement resource restriction pattern.

8. The method according to any of claims 6-7, wherein the information related to MBSFN configuration in the at least one neighbour cell comprises at least one of: an indication of whether configured MBSFN subframes in the at least one neighbour cell coincide with the subframes indicated in the pattern; information indicating the bandwidth of MBSFN in the at least one neighbour cell; information indicating the carrier frequency and/or frequency band in which the MBSFN is used in the at least one neighbour cell.

9. The method according to any of the preceding claims, further comprising transmitting (640), to the wireless device, a list of cells for which the measurement resource restriction pattern applies.

10. The method according to any of the preceding claims, further comprising:
- obtaining (605) information related to an MBSFN configuration of one of the at least one cell, wherein the pattern is determined (610) based on the obtained information.

11. The method according to claim 10, further comprising:
- configuring (650) subframe time shifting in at least one cell associated with the network node with respect to the at least one neighbour cell, such that an indicated subframe corresponds in time to a subframe configured to be used for MBSFN in the at least one neighbour cell.

12. A network node (700) of a communications system, configured to enable measurements performed by a wireless device (750), when Multimedia Broadcast multicast service Single Frequency Network, MBSFN, subframes are configured in the system, the network node comprising:
- a processing unit (701) configured to determine a measurement resource restriction pattern indicating subframes for performing at least one measurement for at least one cell, wherein the indicated subframes are non-MBSFN subframes, and
- a communication unit (702) configured to transmit the measurement resource restriction pattern to the wireless device, for enabling measurements for the at least one cell according to the pattern.

13. The network node according to claim 12, wherein the non-MBSFN subframes comprise subframes that are not MBSFN configurable and/or MBSFN configurable subframes that are not configured with MBSFN.

14. The network node according to any of claims 12-13, wherein the network node is a radio network node or a positioning node.

15. The network node according to any of claims 12-14, wherein the at least one measurement is at least one of: a signal strength measurement, a signal quality measurement, a channel state measurement, a channel quality measurement, a timing measurement, and a direction measurement.

16. The network node according to any of claims 12-15, wherein the measurement resource restriction pattern is at least one of a time domain pattern, a positioning subframe pattern, and a pattern for backhaul communication.

17. The network node according to any of claims 12-16, wherein the communication unit (702) is further configured to transmit, to the wireless device, information related to MBSFN configuration in at least one neighbour cell, the at least one neighbour cell being neighbour to a serving cell of the wireless device.

18. The network node according to claim 17, wherein the communication unit (702) is further configured to transmit the information related to MBSFN configuration in the at least one neighbour cell together with the measurement resource restriction pattern.

19. The network node according to any of claims 17-18, wherein the information related to MBSFN configuration in the at least one neighbour cell comprises at least one of: an indication of whether configured MBSFN subframes in the at least one neighbour cell coincide with the subframes indicated in the pattern; information indicating the bandwidth of MBSFN in the at least one neighbour cell; information indicating the carrier frequency and/or frequency band in which the MBSFN is used in the at least one neighbour cell.

20. The network node according to any of claims 12-19, wherein the communication unit (702) is further configured to transmit, to the wireless device, a list of cells for which the measurement resource restriction pattern applies.

21. The network node according to any of claims 12-20, wherein the processing unit (701) is further configured to obtain information related to an MBSFN configuration of one of the at least one cell, and to determine the pattern based on the obtained information.

22. The network node according to claim 21, wherein the processing unit (701) is further adapted to configure subframe time shifting in at least one cell associated with the network node with respect to the at least one neighbour cell, such that an indicated subframe corresponds in time to a subframe configured to be used for MBSFN in the at least one neighbour cell.

23. A method in a wireless device of a communications system, for performing measurements when Multimedia Broadcast multicast service Single Frequency Network, MBSFN, subframes are configured in the system, the method comprising:
- receiving (420), from a first network node, a measurement resource restriction pattern indicating subframes for performing at least one measurement, and
- performing (430) the at least one measurement for at least one cell of a first cell of the first network node and at least one neighbour cell according to the pattern, assuming that subframes indicated for performing the at least one measurement are non-MBSFN subframes.

24. The method according to claim 23, wherein the first cell is the serving cell or the primary cell.

25. The method according to any of claims 23-24, further comprising receiving (410) from the first network node information related to MBSFN configuration in the at least one neighbour cell, the information indicating that not all of the at least one neighbour cell have the same MBSFN configuration as a serving cell or a primary cell of the wireless device.

26. The method according to any of claims 23-25, wherein the measurement resource restriction pattern is determined by the first network node, or by a positioning node forwarding it to the first network node.

27. The method according to any of claims 23-26, wherein the at least one measurement is at least one of: a signal strength measurement, a signal quality measurement, a channel state measurement, a channel quality measurement, a timing measurement, and a direction measurement.

28. The method according to any of claims 23-27, wherein the measurement resource restriction pattern is at least one of a time domain pattern, a positioning subframe pattern, and a pattern for backhaul communication.

29. The method according to any of claims 25-28, wherein the information related to MBSFN configuration in the at least one neighbour cell is received in a neighCellConfig information element.

30. The method according to any of claims 25-28, wherein the information related to MBSFN configuration in the at least one neighbour cell is received together with the measurement resource restriction pattern.

31. The method according to any of claims 23-30, further comprising:
- receiving (440), from the first network node, additional information related to MBSFN configuration in the at least one neighbour cell.

32. The method according to claim 31, wherein the received additional information comprises at least one of: an indication of whether configured MBSFN subframes in at least one of said at least one neighbour cell coincide with the subframes indicated in the pattern; information indicating the bandwidth of MBSFN in at least one of said at least one neighbour cell; information indicating the carrier frequency and/or frequency band in which the MBSFN is used in at least one of said at least one neighbour cell.

33. The method according to any of claims 23-32, further comprising receiving (425) a list of cells for which the received measurement resource restriction pattern applies, and wherein the at least one measurement is performed (430) for a cell from the list of cells.

34. The method according to claim 33, wherein the list of cells is received in a measSubframeCellList information element.

35. The method according to any of claims 33-34 when dependent on claim 29, wherein the neighCellConfig information element comprises the MBSFN configuration information only for cells from the list of cells.

36. The method according to any of claims 33-35, further comprising performing (435) the at least one measurement for cells that are not in the list of cells only in non-MBSFN subframes.

37. The method according to any of claims 23-32, further comprising identifying (426) a neighbour cell which is using an MBSFN subframe pattern, and performing (430) the at least one measurement for the identified neighbour cell in non-MBSFN subframes.

38. The method according to any of claims 36-37, further comprising performing (436) the at least one measurement also in non-MBSFN symbols of MBSFN subframes, wherein non-MBSFN symbols comprise cell-specific reference signals.

39. The method according to any of claims 37-38, wherein identifying (426) the neighbour cell comprises one of the following:
- receiving an indicator identifying the neighbour cell from the first network node; or
- identifying the neighbour cell based on a signal measurement performed during cell search.

40. A wireless device (550) of a communications system, adapted to perform measurements when Multimedia Broadcast multicast service Single Frequency Network, MBSFN, subframes are configured in the system, the wireless device comprising a processing unit (501) adapted to:
- receive from a first network node, a measurement resource restriction pattern indicating subframes for performing at least one measurement, and
- perform the at least one measurement for at least one cell of a first cell of the first network node and at least one neighbour cell according to the pattern, assuming that subframes indicated for performing the at least one measurement are non-MBSFN subframes.

41. The wireless device according to claim 40, wherein the first cell is the serving cell or the primary cell.

42. The wireless device according to any of claims 40-41, wherein the processing unit (501) is further configured to receive from the first network node, information related to MBSFN configuration in the at least one neighbour cell, the information indicating that not all of the at least one neighbour cell have the same MBSFN configuration as a serving cell or a primary cell of the wireless device.

43. The method according to any of claims 40-42, wherein the measurement resource restriction pattern is determined by the first network node, or by a positioning node forwarding it to the first network node.

44. The wireless device according to any of claims 40-43, wherein the at least one measurement is at least one of: a signal strength measurement, a signal quality measurement, a channel state measurement, a channel quality measurement, a timing measurement, and a direction measurement.

45. The wireless device according to any of claims 40-44, wherein the measurement resource restriction pattern is at least one of a time domain pattern, a positioning subframe pattern, and a pattern for backhaul communication.

46. The wireless device according to any of claims 42-45, wherein the processing unit is adapted to receive the information related to MBSFN configuration in the at least one neighbour cell in a neighCellConfig information element.

47. The wireless device according to any of claims 42-45, wherein the processing unit is adapted to receive the information related to MBSFN configuration in the at least one neighbour cell together with the measurement resource restriction pattern.

48. The wireless device according to any of claims 40-47, wherein the processing unit is further adapted to receive, from the first network node, additional information related to MBSFN configuration in the at least one neighbour cell.

49. The wireless device according to claim 48, wherein the additional information comprises at least one of: an indication of whether configured MBSFN subframes in at least one of said at least one neighbour cell coincide with the subframes indicated in the pattern; information indicating the bandwidth of MBSFN in at least one of said at least one neighbour cell; information indicating the carrier frequency and/or frequency band in which the MBSFN is used in at least one of said at least one neighbour cell.

50. The wireless device according to any of claims 40-49, wherein the processing unit is further adapted to receive a list of cells for which the received measurement resource restriction pattern applies, and to perform the at least one measurement for a cell from the list of cells.

51. The wireless device according to claim 50, wherein the processing unit is adapted to receive the list of cells in a measSubframeCellList information element.

52. The wireless device according to any of claims 50-51 when dependent on claim 46, wherein the neighCellConfig information element comprises the MBSFN configuration information only for cells from the list of cells.

53. The wireless device according to any of claims 50-52, wherein the processing unit is further adapted to perform the at least one measurement for cells that are not in the list of cells only in non-MBSFN subframes.

54. The wireless device according to any of claims 40-49, wherein the processing unit is further adapted to identify a neighbour cell which is using an MBSFN subframe pattern, and to perform the at least one measurement on the identified neighbour cell in non-MBSFN subframes.

55. The wireless device according to any of claims 53-54, wherein the processing unit is further adapted to perform the at least one measurement also in non-MBSFN symbols of MBSFN subframes, wherein non-MBSFN symbols comprise cell-specific reference signals.

56. The wireless device according to any of claims 54-55, wherein the processing unit is further adapted to identify the neighbour cell by:
- receiving an indicator identifying the neighbour cell from the first network node; or
- identifying the neighbour cell based on a signal measurement performed during cell search.

57. A method in a radio base station of a communications system, for enabling measurements performed by a wireless device served by the radio base station, when Multimedia Broadcast multicast service Single Frequency Network, MBSFN, subframes are configured in the system, the method comprising:
- transmitting (810), to the wireless device, a measurement resource restriction pattern indicating subframes for performing at least one measurement, wherein the indicated subframes are non-MBSFN subframes, and
- transmitting (820) a list of cells for which the measurement resource restriction pattern applies.

58. The method according to claim 57, further comprising:
- receiving (800) the measurement resource restriction pattern from at least one of a coordinating node, a self-organizing network node, an operation and maintenance node, a mobility management entity node, and a positioning node.

59. The method according to claim 57, further comprising:
- obtaining (805) information related to an MBSFN configuration in a neighbour cell,
- determining (806) the measurement resource restriction pattern based on the obtained information, wherein the transmitted list of cells comprises the neighbour cell.

60. The method according to claim 59, wherein the obtained information related to MBSFN configuration in the neighbour cell comprises at least one of: an indication of whether configured MBSFN subframes in the neighbour cell coincide with the subframes indicated in the pattern; information indicating the bandwidth of MBSFN in the neighbour cell; information indicating the carrier frequency and/or frequency band in which the MBSFN is used in the neighbour cell.

61. The method according to any of claims 57-60, wherein the at least one measurement is at least one of: a signal strength measurement, a signal quality measurement, a channel state measurement, a channel quality measurement, a timing measurement, and a direction measurement.

62. The method according to any of claims 57-61, wherein the measurement resource restriction pattern is at least one of a time domain pattern, a positioning subframe pattern, and a pattern for backhaul communication.

63. A radio base station (900) of a communications system, configured to enable measurements performed by a wireless device (950) served by the radio base station, when Multimedia Broadcast multicast service Single Frequency Network, MBSFN, subframes are configured in the system, the radio base station comprising a transmitter (901), wherein the transmitter is configured to:
- transmit, to the wireless device, a measurement resource restriction pattern indicating subframes for performing at least one measurement, wherein the indicated subframes are non-MBSFN subframes, and
- transmit a list of cells for which the measurement resource restriction pattern applies.

64. The radio base station according to claim 63, further comprising a communication circuit (902) configured to receive the measurement resource restriction pattern from at least one of a coordinating node, a self-organizing network node, an operation and maintenance node, a mobility management entity node, and a positioning node.

65. The radio base station according to claim 63, further comprising a processing circuit (903) configured to obtain information related to an MBSFN configuration in a neighbour cell, and to determine the measurement resource restriction pattern based on the obtained information, and wherein the transmitted list of cells comprises the neighbour cell.

66. The radio base station according to claim 65, wherein the obtained information related to MBSFN configuration in the neighbour cell comprises at least one of: an indication of whether configured MBSFN subframes in the neighbour cell coincide with the subframes indicated in the pattern; information indicating the bandwidth of MBSFN in the neighbour cell; information indicating the carrier frequency and/or frequency band in which the MBSFN is used in the neighbour cell.

67. The radio base station according to any of claims 63-66, wherein the at least one measurement is at least one of: a signal strength measurement, a signal quality measurement, a channel state measurement, a channel quality measurement, a timing measurement, and a direction measurement.

68. The radio base station according to any of claims 63-67, wherein the measurement resource restriction pattern is at least one of a time domain pattern, a positioning subframe pattern, and a pattern for backhaul communication.
